(19) Europäisches Patentamt
European Patent Office
Office européen des brevets

(11) **EP 3 803 109 B1**

(12) **EUROPÄISCHE PATENTSCHRIFT**

(45) Veröffentlichungstag und Bekanntmachung des Hinweises auf die Patenterteilung:
**26.04.2023 Patentblatt 2023/17**

(21) Anmeldenummer: **19729517.3**

(22) Anmeldetag: **06.06.2019**

(51) Internationale Patentklassifikation (IPC):
***F03D 7/02*** (2006.01)

(52) Gemeinsame Patentklassifikation (CPC):
**F03D 7/0224;** F05B 2270/323; F05B 2270/324; F05B 2270/33; Y02E 10/72

(86) Internationale Anmeldenummer:
**PCT/EP2019/064809**

(87) Internationale Veröffentlichungsnummer:
**WO 2019/234168 (12.12.2019 Gazette 2019/50)**

(54) **VERFAHREN ZUM BETREIBEN EINER WINDENERGIEANLAGE**

METHOD FOR OPERATING A WIND TURBINE

PROCÉDÉ POUR FAIRE FONCTIONNER UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.06.2018 DE 102018113531**

(43) Veröffentlichungstag der Anmeldung:
**14.04.2021 Patentblatt 2021/15**

(73) Patentinhaber: **Wobben Properties GmbH**
**26607 Aurich (DE)**

(72) Erfinder:
• **MESSING, Ralf**
**26605 Aurich (DE)**
• **BOTT, Stefanie**
**28201 Bremen (DE)**
• **JANSSEN, Hendrik**
**26605 Aurich (DE)**

(74) Vertreter: **Eisenführ Speiser**
**Patentanwälte Rechtsanwälte PartGmbB**
**Stralauer Platz 34**
**10243 Berlin (DE)**

(56) Entgegenhaltungen:
EP-A2- 1 918 581       EP-A2- 2 527 643
EP-B1- 2 527 643       WO-A1-02/068818
US-A1- 2013 045 098    US-A1- 2013 101 413

**Beschreibung**

Die vorliegende Erfindung betrifft ein Verfahren gemäß dem Oberbegriff des Anspruchs 1 zum Betreiben einer Windenergieanlage, insbesondere an einem von kaltem Klima geprägten Standort mit einer Luftdichte, und eine Einrichtung zum Betreiben einer Windenergieanlage und eine Windenergieanlage.

Eine Windenergieanlage der eingangs genannten Art ist vorzugsweise als sogenannte Horizontalachsenwindenergieanlagen ausgebildet, bei der die Rotorachse im Wesentlichen horizontal angeordnet ist und die Rotorblätter eine im Wesentlichen senkrechte Rotorfläche überstreichen. Solche modernen Windenergieanlagen weisen meist drei Rotorblätter auf, die zudem in ihrem Blattwinkel verstellt werden können. Eine solche Windenergieanlage weist damit einen aerodynamischen Rotor mit in ihrem Blattwinkel (Pitchwinkel) verstellbaren Rotorblättern auf, wobei der Rotor mit einer variablen Rotordrehzahl betreibbar ist, und einen mit dem aerodynamischen Rotor gekoppelten Generator.

Dabei kann ein Rotorblatt in seinem Blattwinkel zwischen einer Fahnenstellung von etwa 90° bis zu einem leistungsoptimalen Winkel im Teillastbetrieb verstellt werden.

Das Deutsche Patent- und Markenamt hat in der Prioritätsanmeldung zu vorliegender Anmeldung den folgenden Stand der Technik recherchiert: DE 102010054013 A1, DE 102016123450 A1, US 2013/0045098 A1, US 2013/0101413 A1, US 2013/0280066 A1, US 2016/0146189 A1, EP 1368566 B1, EP 1918581 A2 und EP 2463520 A2.

Der leistungsoptimale Winkel im Teillastbetrieb hängt von verschiedenen Parametern ab. Generell kann dieser in einem Bereich um etwa 0 Grad oder darüber liegen. Er kann auch je nach Anlagentyp variieren und es kann ggfs. auch vorteilhaft sein, einen Blattwinkel im Teillastbetrieb etwas unter 0°, z. B. auf -0.5° zu verstellen.

Das Verstellen eines Blattwinkels ($\alpha$) eines verstellbaren Rotorblattes, insbesondere jedes Blattwinkels ($\alpha$) der verstellbaren Rotorblätter, wird grundsätzlich dafür verwendet, das oder die Rotorblätter ab einer Nennwindgeschwindigkeit (Nennbetrieb) im Wesentlichen mit weiter ansteigender Windgeschwindigkeit aus dem Wind zu drehen, nämlich in ihrem Blattwinkel zu erhöhen. D. h. vorliegend wird grundsätzlich die Nomenklatur verwendet, dass ein Blattwinkel zur Fahnenstellung hin erhöht wird. In einem Teillastbereich, in dem die Windgeschwindigkeit noch nicht Nennwindgeschwindigkeit erreicht hat, wird ein leistungsoptimaler Blattwinkel eingestellt. Dieser kann gleichwohl zu unterschiedlichen Drehzahlen grundsätzlich auch anders eingestellt sein, muss also nicht konstant sein für unterschiedliche Drehzahlen.

Dieser auch als Teillastwinkel bezeichnete Blattwinkel ist somit vor allem aerodynamisch optimiert und ggfs. lastoptimiert ausgewählt. Dazu wird die Windenergieanlage möglichst mit einer optimierten Schnelllaufzahl in diesem Teillastbetrieb betrieben. Dabei ist zu beachten, dass dieser optimierte Teillastwinkel auf die optimierte Schnelllaufzahl, also das Verhältnis der Rotordrehzahl zur Windgeschwindigkeit --oder besser Blattspitzengeschwindigkeit zur Windgeschwindigkeit-- abgestimmt ist.

Aktuell werden Leistungsberechnungen für eine Windenergieanlage (WEA) unter Annahme der Normatmosphäre durchgeführt. Die dabei verwendete Norm-Dichte $\rho\_norm$ für die Luftdichte $\rho$ beträgt $\rho\_norm$ =1,225 kg/m³, d. h. nach den Vorschriften der International Civil Aviation Organization (ICAO) für eine Standardatmosphäre (ISA). Die Normluftdichte von 1,225 kg/m³ wird bei 15 °C und 5 m über Meeresspiegel erreicht. So erfolgt die Auslegung einer Windenergieanlage beispielsweise gemäß einer vorbestimmten Temperatur-Enveloppe gemäß dem IEC (International Electrotechnical Commission) - der Zusammenhang zwischen Luftdichte $\rho$ erfordert eine Berücksichtigung der Temperatur T und ggfs. der Luftfeuchte z.B. mittels der Gaskonstanten $R\_f$ der feuchten Luft, wenn man von einer idealen Gasgleichung bei einem Druck p ausgeht:

$$\rho = \frac{1}{R\_f} * \frac{p}{T}$$

Auf diese Weise lässt sich über die Messung von Druck, Temperatur und ggfs. Feuchte der Luft auch eine Dichte-Bestimmung rechnerisch realisieren. Es kann auch eine Standorthöhe der Windenergieanlage genutzt werden, um eine Luftdichte $\rho$ am Standort zu bestimmen.

Es ist auch grundsätzlich bekannt, die für eine Windenergieanlage relevante Luftdichte beim Betrieb einer Windenergieanlage zu berücksichtigen. Eine Anpassung einer Betriebsführung in Abhängigkeit der für die Windenergieanlage relevanten Luftdichte ist bekannt aus EP 1 368 566 B1. Bezüglich der von der Anlage erzeugten elektrischen Leistung gilt:

$$P = \frac{\rho}{2} v_\infty^3 A c_p \eta = \frac{\rho}{2} \frac{v_{tip}^3}{\lambda^3} A c_p \eta$$

Dabei stellt A die durchströmte Rotorkreisfläche, $\eta$ den Wirkungsgrad des elektrischen Triebstranges (vor allem Generatorwirkungsgrad) und $c_p$ den aerodynamischen Leistungsbeiwert dar. Der aerodynamische Leistungsbeiwert wird im Folgenden als konstant angenommen. Unter der Annahme, dass die Leistung P sowie die anderen Variablen der Gleichung konstant gehalten werden könnten, folgt zunächst für die Blattspitzengeschwindigkeit:

$$v_{tip} = \sqrt[3]{\frac{2P\lambda^3}{\rho A c_p \eta}} \sim \sqrt[3]{\frac{1}{\rho}}$$

Die Blattspitzengeschwindigkeit $v_{tip}$ wäre dann also grundsätzlich umgekehrt proportional zur dritten Wurzel aus der Dichte $\rho$ bzw. die Leistung wäre direkt proportional zur Dichte $\rho$ unter der Annahme von konstanten anderen Variablen

Gemäß EP 1 368 566 ist vorgesehen, in der Steuerungsvorrichtung einer Windenergieanlage eine Leistungskennlinie zu hinterlegen, welche der Steuerung der Windenergieanlage erlaubt, aus der ermittelten Rotordrehzahl, die von der Windgeschwindigkeit abhängig ist, die zugeordnete Generatorleistung zu ermitteln. Es wurde erkannt, dass wenn die Energiemenge des Windes zu gering ist, der Rotor des Generators ein angelegtes Generatormoment nicht aufbringen kann und daher die Rotordrehzahl infolge eines zu hohen Generatormomentes sinken kann. Als Lösung ist in EP 1 368 566 B1 vorgeschlagen, dass die Berücksichtigung der Höhe des Aufbauortes der Windenergieanlage über NN die geringere Luftdichte in der Leistungskennlinie berücksichtigt. Dadurch kann die einer Rotordrehzahl und damit einer bestimmten Schnelllaufzahl $\lambda$ zugeordnete, von der Windenergieanlage zu erzeugende Leistung entsprechend angepasst werden, also herabgesetzt werden, sodass das Generatormoment infolge der durch die Steuerungsvorrichtung eingestellten Erregerstroms das über den Rotor bereitgestellte Drehmoment nicht überschreitet. Dies führt dazu, dass der über die Leistungskennlinie festgelegte Wirkungsgrad erhalten bleibt und dem Wind die maximale Energie entnommen werden kann.

Auch auf einen Geräuschpegel kann die Luftdichte Einfluss haben; so ist aus US 2013/0280066 A1 ein Verfahren zum Betreiben einer Windenergieanlage bekannt, wobei in einem Geräuschreduktionsmodus basierend auf wenigstens einem Sollwert eines Windenergieanlagenparameters der von der Windturbine erzeugte Lärm unterhalb eines vordefinierten Geräuschemissionspegels bleibt. Es ist vorgesehen, einen Korrekturfaktor auf den mindestens einen Sollwert eines Windenergieanlagenparameters anzuwenden. Der Korrekturfaktor wird in Abhängigkeit von einem luftdichtebezogenen Wert bestimmt. Dazu wird als vorteilhaft hingestellt, dass an kalten Standorten mittels einem Geräuschpegelmanagement (SPE) oder einem Geräuschunterdrückungsbetrieb (NRO) unter Berücksichtigung der Luftdichte Vorgaben zu einem Geräuschpegel besser eingehalten werden können.

Die leistungsbezogenen Abhängigkeiten im Rahmen einer Regelung sind jedoch komplex - so offenbart US 2013/0101413 A1 ein Verfahren zum Steuern des Blattwinkels einer Windenergieanlage mit einem Rotor mit mindestens einem Rotorblatt. Das Einstellen des entsprechenden Anstellwinkels des mindestens eines Rotorblattes wird als eine Funktion der bestimmten Luftdichte betrachtet. Dazu wird ein Referenz-Pitchwinkel über einen Korrektur-Pitchwinkel korrigiert, damit ein Retrofitting existierender Pitchsteuerungen mit dieser Methode möglich ist. Nach Fig.2 der US 2013/0101413 A1 steigt erwartungsgemäß eine Leistung einer Windenergieanlage mit einer Luftdichte bei einer bestimmten Windgeschwindigkeit infolge der vom Wind pro Zeitraum dichteabhängig eingetragenen kinetischen Energie. Zwar wird außerdem eine erhöhte Luftdichte nicht notwendigerweise zu einer erhöhten Rotor-Geschwindigkeit führen (jedenfalls nicht im variablen Geschwindigkeits-Regelungsbereich für den Rotor bei geringen Windgeschwindigkeiten) aber nach Fig.3 der US 2013/0101413 A1 steigt bei einer festen bestimmten Rotor-Geschwindigkeit die Leistung mit der Luftdichte; dies kann durch Einstellen eines höheren Generatormoments bei höherer Luftdichte erreicht werden. Ab einer bestimmten oberen Rotor-Geschwindigkeit wird ein Generatormoment erhöht; dies kann die Nenn-Rotorgeschwindigkeit sein. Die Leistung der Windenergieanlage steigt danach mit erhöhter Windgeschwindigkeit infolge des erhöhten Generatormoments.

Nach US 2013/0101413 A1 ist demnach derjenige Pitchwinkel (Blattwinkel) optimal, in dem die höchste Leistung der Windturbine erreichbar ist und der optimierte Pitchwinkel ist demnach derjenige, welcher die geringste Windgeschwindigkeit zum Erreichen einer bestimmten Leistung benötigt. Für dieses Regelwerk einer Leistungsoptimierung ist der optimierte Pitchwinkel angegeben für eine in Bezug auf eine Norm-Dichte von 1.225 kg/m³ nach IEC-Standard erniedrigte Luftdichte von 1.0 kg/m³ und 0.8 kg/m³. Es zeigt sich, dass der Einfluss der Luftdichte auf einen so optimierten Pitchwinkel nach Fig.4 der US 2013/0101413 A1 vergleichsweise stark ist.

EP 2 463 520 A2 betrifft ein Verfahren zum Betrieb einer pitchgeregelten Windenergieanlage, bei der abhängig von einer Drehzahl n des Generators oder Rotors ein Sollwert M für das Generatormoment zugeordnet wird. Im Teillastbetrieb wird mit zunehmender Drehzahl der Sollwert für das Generatormoment erhöht. Im Nennlastbetrieb erfolgt eine Regelung der Drehzahl n3 durch die Verstellung des Blatteinstellwinkels bei einem Sollwert M3. Ein Übergang von einem Teillastbetrieb in einen Nennlastbetrieb erfolgt an einem Übergangspunkt, der durch einen Wert für die Drehzahl n3 und einen Sollwert für das Generatormoment M3 definiert ist. Es werden Werte des Übergangspunktes abhängig von einem aktuellen Wert der Luftdichte bestimmt, wobei mit fallender Luftdichte die Drehzahl n3 erhöht und/oder der Sollwert für das Generatormoment M3 reduziert wird.

Demnach ist es grundsätzlich bekannt, eine Luftdichte am Standort der Windenergieanlage anzugeben und jeden Blattwinkel der verstellbaren Rotorblätter unter Vorgabe, insbesondere in Abhängigkeit, einer Ausgangsleistung und/oder der Rotordrehzahl einzustellen. Windenergieanlagen werden zunehmend in sehr abgelegenen Regionen aufgestellt, die klimatisch und von der Aufstellungshöhe von üblichen Randbedingungen signifikant abweichen können. Je stärker hier die Randbedingungen, besonders atmosphärische Bedingungen, von üblichen Voraussetzungen abweichen, umso weniger passen die Annahmen, die der Berechnung des optimalen Teillastwinkels und ggfs. einer optimalen Schnelllaufzahl zugrunde liegen, zu dem Aufstellungsort. Entsprechend kann sich zumindest eine schlechtere Effizienz im Teillastbetrieb einstellen. Es kann sogar dazu führen, dass ein Teillastbetrieb wie geplant nicht möglich ist, zumindest vergleichsweise instabil arbeitet. An Standorten in beispielsweise großer Höhe und/oder mit im Mittel erhöhten Temperaturen stimmen diese Annahmen jedoch zumindest quantitativ nicht mehr. Es können an Standorten in großer Höhe durchaus gravierende Abweichungen in der Dichte zu kleineren Werten bis ca. 30% von den Auslegebedingungen basierend auf der verwendeten NormDichte p_norm auftreten.

EP 1 918 581 A2 sieht andererseits vor, eine Temperatur der Umgebung einer Windenergieanlage zu messen und die Ausgangsleistung der Windenergieanlage zu senken, wenn die umgebende Luft-Temperatur unterhalb einer vorbestimmten Grenze ist, um dadurch Lasten an Komponenten der Windenergieanlage zu reduzieren - es kann ein Bestimmung der Luftdichte durch Messung von umgebendem Druck und umgebender Temperatur bei kalten Wetterbedingungen genutzt werden, um die auf die Windenergieanlage wirkende Last gemäß der bestimmten Luftdichte zu reduzieren, sodass diese innerhalb derjenigen zulässigen Last liegt, für welche die Windenergieanlage ausgelegt ist.

Es hat sich gleichwohl als relevant erwiesen, den jährlichen Ertrag (AEP - Annual Energy Production) einer WEA zu optimieren. Dies gilt insbesondere für den oben genannten Fall einer veränderten Luftdichte. Mit geringer werdender Luftdichte kann die zur Verfügung stehende Windleistung geringer ausfallen während mit steigender Luftdichte Lasten an der Windenergieanlage größer werden können. Wünschenswert ist es, eine zur Verfügung stehende Windleistung insgesamt bestmöglich zu nutzen und gleichwohl nachteilige Effekte für die Windenergieanlage, wie z. B. Lasten mit steigender Luftdichte zu berücksichtigen.

Nach dem Stand der Technik ist der Blattwinkel (Pitchwinkel) in Abhängigkeit der Luftdichte bei konstanter Leistung jedoch grundsätzlich --wie eingangs erläutert-- eine monoton fallende Funktion. Rotorblätter werden für eine "Cold Climate"-Luftdichte; d. h. einer Luftdichte bei kalter Umgebung in Bezug auf die Auslegung der Anlage.so ausgelegt, dass sie selbst unter härtesten klimatischen Bedingungen und größtmöglicher Durchbiegung des Rotorblattes sich beim Turmdurchgang noch ein ausreichender Abstand zwischen Blattspitze und Turm ergibt, der sogenannte Turmfreigang also immer Werte deutlich > 0 annimmt; und es dadurch in keinem Fall zu einer fatalen Berührung der Blattspitze mit dem Turm kommt.

Eine "Cold Climate"-Luftdichte auf Seehöhe kann beispielsweise bevorzugt als Referenzdichte $\rho 0$ mit $\rho >= 1,3\,kg/m^3$ angenommen werden, wobei sich versteht, dass der Wert $p >= 1,3\,kg/m^3$ grundsätzlich beispielhaft gewählt ist und auch ein anderer Wert zwischen einer Normdichte p_norm und 1,3 kg/m³ als "Cold Climate"-Luftdichte für eine Referenzdichte gewählt werden könnte. Werden Anlagen für solche sogenannte "Cold Climate"-Bedingungen ertüchtigt, muss demzufolge auch für diese höheren Luftdichten --bei denen größere Lasten und damit größere Blattdurchbiegungen auftreten als bei der Normluftdichte p_norm= 1,225 kg/m³- der Turmfreigang gewährleistet sein. Die Festlegung der Betriebsführung und hier insbesondere die Vorgabe eines Blattwinkels bei Teillast und zum Eintritt in den Nennlastbereich, sollte also so vorgenommen werden, dass unter "Cold Climate"-Bedingungen der Turmfreigang sichergestellt ist.

An dieser Stelle setzt die Erfindung an, deren Aufgabe es ist, ein Verfahren und eine Einrichtung zum Betrieb einer Windenergieanlage mit einem Rotor und über dem Rotor angetriebenen Generator anzugeben, insbesondere zur Erzeugung einer elektrischen Leistung, sowie eine dementsprechende Windenergieanlage anzugeben. Der Erfindung liegt die Aufgabe zugrunde, wenigstens eines der oben genannten Probleme zu beheben oder zu verringern.

Insbesondere soll unter Berücksichtigung einer für die Windenergieanlage relevanten Luftdichte, insbesondere nach Maßgabe von "Cold Climate"-Bedingungen, sowie vorteilhaft unter Sicherung des Turmfreigangs dennoch insgesamt die zur Verfügung stehende Windleistung in verbesserter Weise genutzt werden.

Insbesondere soll eine Erhöhung der Jahreserträge einer pitchgesteuerten bzw. einer im Blattwinkel anpassbaren, drehzahlvariablen Windkraftanlage erreicht werden. Vorzugsweise ist dies im Sinne einer gesteigerten AEP einer Windenergieanlage zu verstehen, wobei vorzugsweise gleichwohl Einwirkungen auf die Umwelt und/oder übermäßige Lasten auf die Windenergieanlage unter Kontrolle gehalten werden sollen --im Vergleich zu Normalbedingungen-- bei geringeren als auch höheren Luftdichten.

Insbesondere ist es weiter eine Aufgabe der Erfindung, bei einem solchen Verfahren bzw. einer entsprechenden Einrichtung zum Steuern und/oder Regeln bzw. einer entsprechenden Windenergieanlage die Betriebsführung in Abhängigkeit der für die Windenergieanlage relevanten --im Vergleich zu Normalbedingungen-- geringeren und höheren Luftdichte derart anzupassen, dass eine abzugebende elektrische Leistung des Generators optimiert oder verbessert werden kann und gleichwohl die genannten Lasten unter Kontrolle gehalten werden können.

Insbesondere ist es Aufgabe der Erfindung, eine entsprechende Einrichtung zum Steuern und/oder Regeln einer Windenergieanlage anzugeben sowie eine entsprechende Windenergieanlage anzugeben, welche diese Aufgabenstellung berücksichtigt.

Die Aufgabe betreffend das Verfahren wird durch die Erfindung mit einem Verfahren des Anspruchs 1 gelöst.

Das Verfahren der eingangs genannten Art basiert gemäß dem Oberbegriff des Anspruchs 1 darauf, dass zum Betreiben einer Windenergieanlage, insbesondere an einem von kalten Klima geprägten Standort, die Windenergieanlage aufweist:

- einen aerodynamischen Rotor mit in ihrem Blattwinkel verstellbaren Rotorblättern, wobei der Rotor mit einer variablen Rotordrehzahl betreibbar ist, und einen mit dem aerodynamischen Rotor gekoppelten Generator, insbesondere zum Erzeugen einer Ausgangsleistung. Das Verfahren weist die Schritte auf:

  - Angeben einer Luftdichte am Standort der Windenergieanlage

  - Einstellen eines Blattwinkels ($\alpha$) eines verstellbaren Rotorblattes, insbesondere jedes Blattwinkels der verstellbaren Rotorblätter, in Abhängigkeit der Ausgangsleistung und/oder eines Drehmoments und/oder der Rotordrehzahl. Erfindungsgemäß ist weiter vorgesehen, dass

  - das Einstellen des Blattwinkels unter Vorgabe, insbesondere in Abhängigkeit, wenigstens einer Pitchkennlinie erfolgt, die den Blattwinkel als Funktion der Ausgangsleistung und/oder des Drehmoments und/oder der Rotordrehzahl und in Abhängigkeit der Luftdichte angibt, wobei

  - zur Berücksichtigung einer Luftdichte am Standort der Windenergieanlage die Pitchkennlinie eine von der Luftdichte am Standort abhängige Pitchkennlinie ist, und der Blattwinkel in Abhängigkeit von der Luftdichte am Standort im Bereich einer für den Standort geltenden Referenzdichte einer Standortatmosphäre ein Minimum aufweist, insbesondere einer Standortatmosphäre an dem von kaltem Klima geprägten Standort.

Vorzugsweise ist die Referenzdichte einer Standortatmosphäre eine Normdichte einer Normatmosphäre oder eine "Cold Climate"-Luftdichte eines von kaltem Klima geprägten Standorts, vorzugsweise eine Referenzdichte ($\rho 0$) mit einer Dichte ($\rho$) oberhalb oder bei 1,3 kg/m$^3$.

Generell erfolgt vorteilhaft eine Auslegung der Windenergieanlage, insbesondere eines Blattes der Windenergieanlage, auf eine bestimmte Luftdichte am Standort als Referenzdichte. Ein Standort erfährt jedoch auch eine Bandbreite von Luftdichten um die Referenzdichte herum, vor allem infolge von Temperaturschwankungen. Die Referenzdichte kann so beispielsweise eine mittlere Luftdichte am Standort sein. So umfasst der Bereich des Minimums bei der Referenzdichte der Standortatmosphäre vorteilhaft eine Luftdichte, die +/- 10%, insbesondere +/- 5%, von der Referenzdichte abweicht. Ist die Referenzdichte am Standort die Normdichte einer Normatmosphäre umfasst der Bereich des Minimums bei der Normdichte der Normatmosphäre eine Luftdichte, die +/- 10%, insbesondere +/- 5% von der Normdichte abweicht. Als Referenzdichte kann auch eine "Cold Climate"-Luftdichte eines von kaltem Klima geprägten Standorts dienen, vorzugsweise eine Referenzdichte mit einer Dichte oberhalb oder bei 1,3 kg/m$^3$.

Im Ergebnis sieht die Erfindung-sehr vereinfacht-- die Verwendung einer an die Luftdichte des Standorts angepasste Festlegung einer besonderen Betriebsführung vor, insbesondere Pitchkennlinien, Nenndrehzahlen und/oder Leistungskennlinien bzw. Drehmomentkennlinien vor. Die Erfindung geht von der Überlegung aus, dass nur bei relativ wenigen Standorten überhaupt mittlere Luftdichten vorkommen können, die signifikant über der Normluftdichte -bzw. signifikant über der allgemein Referenzdichte-liegen. Selbst bei Anlagen an solchen Standorten sind über das Jahr betrachtet die Zeiträume begrenzt, an denen die Anlagen Luftdichten ausgesetzt sind, die aufgrund niedrigerer Umgebungstemperaturen nochmals über diesen erhöhten mittleren Luftdichten liegen.

Es lässt sich gemäß der Überlegung der Erfindung insbesondere feststellen, dass nach dem Stand der Technik eine Windkraftanlage hinsichtlich des Turmfreiganges für Situationen ertüchtigt wird, denen sie nur während eines Bruchteiles ihrer Betriebszeit tatsächlich ausgesetzt sind. Oder anders ausgedrückt ist der Turmfreigang bei beispielsweise Normdichte größer als er sein müsste, da die Anlage dafür ausgelegt ist und betrieben wird, dass selbst für Luftdichten $\rho$, die größer als die Normdichte p_norm=1,225 kg/m$^3$ -bzw. allgemein Referenzdichte p0-- sind, mit dann größeren Lasten und Blattdurchbiegungen noch ausreichender Turmfreigang vorliegt.

Die Erkenntnis der Erfindung liegt nun darin, die Anlage so zu betreiben, dass sie für Luftdichten größer gleich der Normluftdichte p_norm=1,225 kg/m$^3$ oder nur leicht darunter wie beispielsweise 5% unter p_norm -bzw. allgemein größer gleich der Referenzdichte $\rho 0$ oder nur leicht darunter, wie beispielsweise 5% unter der Referenzdichte p0-- nur so viel Turmfreigang aufweist wie nötig ist. Konkret kann gemäß dieser Erkenntnis die Blattdurchbiegung über den Blattwinkel gesteuert werden.

Die Erfindung hat erkannt, dass über einen größeren Blattwinkel ($\alpha$) ein Schub auf ein Rotorblatt und damit die Durchbiegung desselben reduziert werden kann. Die Auslegung des Rotorblattes und die Pitchführung wären also bei Normdichte -bzw. allgemein Referenzdichte-- so aufeinander abgestimmt, dass sich dann ein minimaler Turmfreigang einstellt. Bei einer solchen Vorgehensweise im Sinne der Erfindung stellen sich bei Normdichte p_norm -bzw. allgemein Referenzdichte p0-- demnach kleinere Blattwinkel ein als nach Stand der Technik.

Das Pitchen eines Rotorblatts oder der Rotorblätter ist gemäß der Erkenntnis der Erfindung damit der Luftdichte anzupassen, d. h. der einzustellende Blattwinkel ist eine Funktion der Ausgangsleistung und/oder des Drehmoments und/oder der Rotordrehzahl und zudem der Luftdichte (und nicht nur wie bisher eine Funktion der Ausgangsleistung und/oder des Drehmoments und/oder der Rotordrehzahl).

Die Erfindung lässt sich an drehzahlvariablen, pitchgesteuerten Windkraftanlagen realisieren, die eine Bestimmung der Luftdichte vorsehen (die z.B. in der Lage sind über eine Messung des Luftdruckes und der Temperatur und/oder der Standorthöhe der Anlage, die Luftdichte zu bestimmen) und die Möglichkeit haben, diesen Wert in der Steuerung des Blattwinkels zu berücksichtigen. Im Rahmen einer Weiterbildung kann dieser Wert auch in der Steuerung der Nenndrehzahl berücksichtigt werden.

Zur Berücksichtigung einer Luftdichte am Standort der Windenergieanlage sieht die Erfindung demnach eine Pitchkennlinie vor, die eine von der Luftdichte am Standort abhängige Pitchkennlinie ist.

Gemäß der Pitchkennlinie weist der Blattwinkel in Abhängigkeit von der Luftdichte am Standort im Bereich einer für den Standort geltenden Referenzdichte einer Standortatmosphäre ein Minimum auf, insbesondere einer Standortatmosphäre an dem von kaltem Klima geprägten Standort.

Bei kleineren Blattwinkeln kann zudem in den meisten Fällen im Rahmen der Weiterbildung dem Wind mehr Leistung entnommen werden und der Ertrag wird durch das erfindungsgemäße Vorgehen gesteigert gegenüber dem bisherigen Vorgehen nach Stand der Technik. Zweck der Erfindung ist u.a. auch eine Basis zu schaffen für eine Erhöhung der Jahreserträge einer pitchgesteuerten, drehzahlvariablen Windkraftanlage durch die Verwendung von an die Luftdichte des Standorts angepasste Pitchkennlinien und/oder --jedenfalls im Rahmen der Weiterbildung-- Nenndrehzahlen.

Die Erfindung führt im Rahmen der Aufgabenstellung auch auf eine Einrichtung des Anspruchs 22 und eine Windenergieanlage des Anspruchs 23.

Die Einrichtung ist zum Steuern und/oder Regeln einer Windenergieanlage einem aerodynamischen Rotor mit in ihrem Blattwinkel verstellbaren Rotorblättern, wobei der Rotor mit einer variablen Rotordrehzahl betreibbar ist, und mit einem mit dem aerodynamischen Rotor gekoppelten Generator ausgebildet. Die Einrichtung weist eine Betriebsführung auf, die ausgebildet ist zur Ausführung des erfindungsgemäßen Verfahrens, wobei die Betriebsführung zum Angeben einer Luftdichte am Standort der Windenergieanlage und Einstellen jedes Blattwinkels der verstellbaren Rotorblätter in Abhängigkeit einer Ausgangsleistung und/oder eines Drehmoments und/oder der Rotordrehzahl ausgebildet ist.

Erfindungsgemäß ist vorgesehen, dass

- die Betriebsführung eine Pitchkennlinie aufweist und das Einstellen des Blattwinkels unter Vorgabe, insbesondere in Abhängigkeit, wenigstens der Pitchkennlinie erfolgt, die den Blattwinkel als Funktion der Ausgangsleistung, des Drehmoments und/oder der Rotordrehzahl und in Abhängigkeit der Luftdichte angibt, wobei

- zur Berücksichtigung einer Luftdichte am Standort der Windenergieanlage, die Pitchkennlinie eine von der Luftdichte am Standort abhängige Pitchkennlinie ist und der Blattwinkel der Pitchkennlinie in Abhängigkeit von der Luftdichte im Bereich einer für den Standort geltenden Referenzdichte einer Standortatmosphäre ein Minimum aufweist, insbesondere einer Standortatmosphäre an einem von kaltem Klima geprägten Standort.

Die Windenergieanlage, insbesondere an einem von kaltem Klima geprägten Standort mit einer Luftdichte, hat einen aerodynamischen Rotor mit in ihrem Blattwinkel verstellbaren Rotorblättern, wobei der Rotor mit einer variablen Rotordrehzahl betreibbar ist, und

- einen mit dem aerodynamischen Rotor gekoppelten Generator.

Die Windenergieanlage ist gekennzeichnet durch die erfindungsgemäße Einrichtung zum Steuern und/oder Regeln und/oder ausgebildet zur Durchführung des erfindungsgemäßen Verfahrens.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Vorzugsweise ist die Referenzdichte ($\rho 0$) einer Standortatmosphäre eine Normdichte (p_norm) einer Normatmosphäre oder eine "Cold Climate"-Luftdichte eines von kaltem Klima geprägten Standorts, vorzugsweise eine Referenzdichte ($\rho 0$) mit einer Dichte ($\rho$) oberhalb oder bei 1,3 kg/m$^3$.

Ein von einem kalten Klima geprägter Standort der Windenergieanlage ist insbesondere ein Standort, dessen mittlere Temperatur über das Jahr unter 0°C liegt, insbesondere unter -15°C liegt und/oder dessen minimale Temperatur über das Jahr in einem Bereich unter -15°C, insbesondere unter -20°C, liegt und/oder eine Referenzdichte ($\rho 0$) mit einer Dichte ($\rho$) oberhalb oder bei 1,3 kg/m$^3$ angenommen werden kann.

Im Rahmen einer Weiterbildung wird die Funktion der Pitchkennlinie im Vorfeld auf Basis theoretischer Überlegungen erstellt und in der Betriebsführung der Anlage hinterlegt.

An der Anlage können der Luftdruck und/oder die Temperatur und/oder die Luftfeuchte sowie ggfs. zusätzlich oder alternativ auch eine Standorthöhe gemessen werden. Vorteilhaft kann daraus die Luftdichte berechnet werden oder die Luftdichte direkt gemessen werden, sodass mit Hilfe der hinterlegten Funktion der Blattwinkel bestimmt werden kann. Vorzugsweise ist vorgesehen, dass für die Windenergieanlage relevante Umgebungsvariablen umfassend wenigstens die für die Windenergieanlage relevante Luftdichte und/oder Temperatur und/oder Luftfeuchte sowie ggfs. zusätzlich oder alternativ auch eine Standorthöhe erfasst werden. Insbesondere kann zur Erfassung der Luftdichte ein Luftdruck und eine Lufttemperatur und/oder Luftfeuchte sowie ggfs. zusätzlich oder alternativ auch eine Standorthöhe als weitere relevante Umgebungsvariablen in der Umgebung der Windenergieanlage gemessen werden und daraus die Luftdichte bestimmt werden.

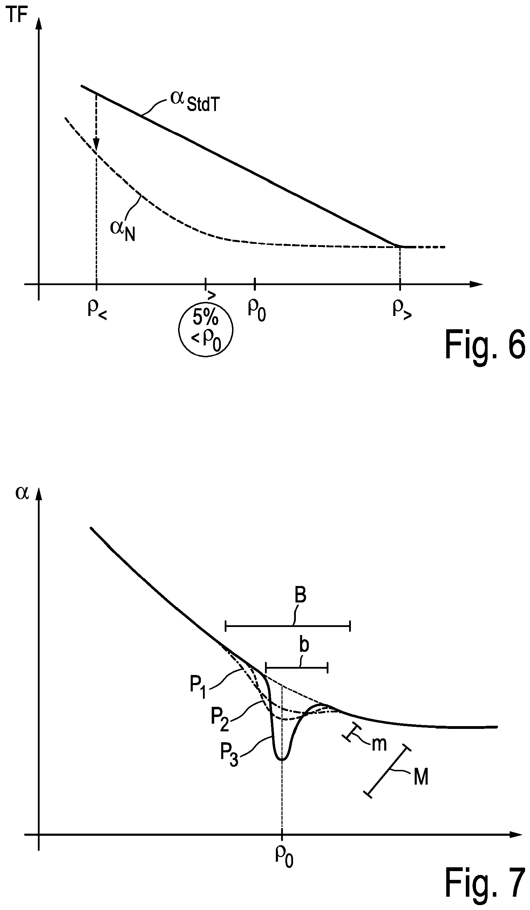

Vorteilhaft wird die Durchbiegung bzw. der Turmfreigang im Betrieb gemessen und aufgrund dieser Messwerte wird der Blattwinkel so eingestellt, dass immer ein ausreichender Turmfreigang gewährleistet ist. Vorteilhaft wird ein Turmfreigang und / oder eine Blattbiegung bei der Referenzdichte einer Standortatmosphäre festgelegt. Insbesondere ist vorgesehen, dass ein horizontaler Abstand im Bereich einer Blattspitze und/oder eine Blattbiegung des Rotorblattes zu einem Turm beim Turmdurchgang des Rotorblatts der Windenergieanlage festgelegt oder gemessen wird, wobei das Minimum des Blattwinkels derart festgelegt ist, dass der Turmfreigang minimal ist. Eine prinzipiell veranschaulichende Darstellung dieses besonders bevorzugten Zusammenhangs ist in Fig.6 gezeigt. Darin ist insbesondere das folgende ersichtlich.

Vorzugsweise ist vorgesehen, dass ein Turmfreigang bei einer Normdichte einer Normatmosphäre -bzw. allgemein Referenzdichte einer Standortatmosphäre-- bei dem lokalen Minimum des Blattwinkels minimal ist, wobei die von der Luftdichte abhängige Pitchkennlinie $(K\alpha,\rho)$ derart verläuft, dass der minimale Turmfreigang beim Einstellen des Blattwinkels unter Vorgabe wenigstens der Pitchkennlinie erhalten bleibt.

Vorzugsweise ist weiter vorgesehen, dass die von der Luftdichte abhängige Pitchkennlinie derart verläuft, dass der minimale Turmfreigang beim Einstellen des Blattwinkels unter Vorgabe wenigstens der Pitchkennlinie wenigstens für eine über die Referenzdichte einer Standortatmosphäre, insbesondere Normdichte einer Normatmosphäre, erhöhte Luftdichte weitgehend erhalten oder konstant bleibt im Vergleich zu einem linear abnehmenden minimalen Turmfreigang in Abhängigkeit der Luftdichte für eine gleiche erhöhte Luftdichte. Mit den Maßnahmen des Konzepts der Erfindung kann zusätzlich oder alternativ auch ein Turmfreigang für erniedrigte Luftdichte gesenkt werden im Vergleich zu einem linear abnehmenden minimalen Turmfreigang in Abhängigkeit der Luftdichte für eine gleiche erniedrigte Luftdichte.

Vorzugsweise ist ein Blattwinkel abgesenkt und/oder eine Nenndrehzahl bei Nennbetrieb angehoben im Bereich einer für den Standort geltenden Referenzdichte einer Standortatmosphäre.

Insbesondere ist vorgesehen, dass mit dem Blattwinkel bei der Normdichte bei der Normatmosphäre -bzw. allgemein Referenzdichte einer Standortatmosphäre-- eine Nenndrehzahl (n_N) bei Nennbetrieb angehoben ist gegenüber einer mit größerem Blattwinkel vorgesehenen Drehzahl gemäß der von der Luftdichte abhängigen Pitchkennlinie.

Vorzugsweise ist vorgesehen, dass eine Nenndrehzahl (n_N) bei Nennbetrieb angehoben ist im Bereich zwischen einer Drehzahl zu einem ersten Blattwinkel $(\alpha > (\rho >)$ einer gegenüber der Normatmosphäre erhöhten Luftdichte $(\rho >)$ und einer Drehzahl zu einem zweiten Blattwinkel $(\alpha < (\rho <)$ einer gegenüber der Normatmosphäre erniedrigten Luftdichte (p<); insbesondere im Bereich des Minimums $(\alpha 0)$ des Pitchwinkels, nämlich im Bereich einer für den Standort geltenden Referenzdichte $(\rho 0)$ einer Standortatmosphäre, die insbesondere eine Luftdichte umfasst, die +/- 10%, insbesondere +/- 5%, von der Referenzdichte, insbesondere Normdichte, abweicht.

Vorteilhaft kann nämlich wenigstens teilweise statt des Absenkens des Blattwinkels bei Normluftdichte -bzw. allgemein bei Referenzdichte-- oder in Kombination mit einem Absenken des Blattwinkels auch eine Anhebung der Nenndrehzahl gegenüber dem Betrieb unter "Cold Climate"-Bedingungen vorgesehen werden. Eine solche Anhebung der Nenndrehzahl kann qualitativ dieselben Effekte, wie für das Pitchen beschrieben, haben.

Es kann auch eine Kombination aus Absenken des Blattwinkels und Anhebung der Nenndrehzahl vorgesehen werden. In jedem Fall könnte jedoch die Anlage bei Normluftdichte $\rho = 1,225$ kg/m$^3$-bzw. allgemein bei Referenzdichte--mit anderen Einstellungen hinsichtlich des Blattwinkels und/oder der Nenndrehzahl betrieben werden als bei "Cold Climate"- Bedingungen, vorzugsweise mit Dichten p>=1,3 kg/m$^3$.

Beispielsweise bietet das Konzept der Erfindung vorteilhaft im Rahmen einer ersten Weiterbildung die Möglichkeit, den Jahresertrag bei Windenergieanlagen an Standorten mit jedenfalls geringerer -bzw. variabel schwankender-- Dichte einzuhalten oder zu steigern unter Verwendung einer veränderten Betriebsführung, vorzugsweise mittels einer veränderten Betriebskennlinie.

Um die an dem genannten Minimum der Pitchkennlinie bei niedriger Dichte zur Verfügung stehende Windleistung zu kompensieren, sieht eine Weiterbildung insbesondere vor, die Anlagen mit einer höheren Nenndrehzahl zu betreiben, jedenfalls bei einer im Vergleich zur Normdichte -bzw. allgemein Referenzdichte einer Standortatmosphäre-- niedrigeren Dichte am Standort der Windenergieanlage. Um die am Minimum bei niedriger Dichte zur Verfügung stehende Windleistung auszuschöpfen, sieht eine Weiterbildung insbesondere vor, die Anlagen mit einer höheren Nenndrehzahl zu betreiben.

Die Weiterbildung geht dazu von der Überlegung aus, dass die Betriebsführung in Abhängigkeit der für die Windenergieanlage relevanten Luftdichte angepasst werden kann. Gemäß dem Konzept der Weiterbildung sollte dies dazu führen, dass die angepasste Drehzahl des Rotors gewählt wird zum Erzeugen einer vorzugsweise optimierten abzugebenden elektrischen Leistung des Generators. Dies bedeutet, dass im Falle einer für die Windenergieanlage relevanten vergleichsweise erniedrigten Luftdichte jedenfalls im Bereich eines Blattwinkels um das lokale Minimum herum, die angepasste Nenndrehzahl erhöht ist gegenüber einer (Nenn-)Drehzahl betreffend eine Normdichte einer Normatmosphäre, bzw. allgemein betreffend eine Referenzdichte einer Standortatmosphäre.

Allgemein kann im Rahmen der Weiterbildung grundsätzlich für den Fall, dass die Luftdichte eine gegenüber einer Referenzdichte erniedrigte oder erhöhte Luftdichte ist, in dem Bereich um die Referenzdichte $\rho 0$ zwischen einer Dichte $\rho<$ und einer Dichte $\rho>$ mit einem Blattwinkel $\alpha<$ bzw. $\alpha>$ eine korrigierte Drehzahl eine gegenüber der Drehzahl für die Standortatmosphäre erhöhte Drehzahl sein.

Im Rahmen der Weiterbildung kann insbesondere für den Fall, dass die Luftdichte eine gegenüber einer Normdichte erniedrigte oder erhöhte Luftdichte ist, in dem Bereich um die Normdichte zwischen einer Dichte $\rho<$ und einer Dichte $\rho>$ mit einem Blattwinkel $\alpha<$ bzw. $\alpha>$ eine korrigierte Drehzahl eine gegenüber der Drehzahl für die Normatmosphäre erhöhte Drehzahl sein.

So kann im Rahmen dieser Weiterbildung abhängig von Lufttemperatur und/oder Luftdichte unter Verwendung der für die Windenergieanlage relevanten erniedrigten Luftdichte eine Drehzahl des Rotors der Windenergieanlage erhöht werden. Die Windenergieanlage kann dazu gemäß der erfindungsgemäßen Pitchkennlinie gesteuert und/oder geregelt werden. Vorteilhaft kann beispielsweise eine Leistung, insbesondere Nennleistung, erhöht werden bzw. eine garantierte abzugebende Leistung gewährleistet werden, etwa nach Maßgabe einer Jahres-Energie-Produktion (annual energy production - AEP).

Das heißt vorteilhaft kann die Windenergieanlage insgesamt zum Erzeugen der abzugebenden Leistung unter Einstellen des Generators eingestellt werden, unter Einstellen eines Erregerstroms, vorzugsweise des Generator-Läufers, unter Einstellen eines oder mehrerer Rotorblätter und/oder eines oder mehrerer Strömungselemente an einem Rotorblatt, unter Einstellen einer Azimuthposition der Gondel der Windenergieanlage.

Es hat sich insgesamt im Rahmen der Weiterbildung als vorteilhaft erwiesen, dass die Drehzahl beeinflusst und/oder eingestellt wird mittels einer Ansteuerung des Blattwinkels einer Komponente am Rotor, insbesondere eines Blatt-Winkels eines Rotorblattes gemäß einer Pitchkennlinie gemäß dem Konzept der Erfindung unter Vorgabe der abzugebenden elektrischen Leistung und der Luftdichte.

Vorzugsweise ist vorgesehen, dass der Blattwinkel auf der von der Luftdichte abhängigen Pitchkennlinie ausgehend von der Referenzdichte der Standortatmosphäre, insbesondere einer Normdichte der Normatmosphäre, mit abnehmender und zunehmender Luftdichte ansteigt.

Vorzugsweise ist vorgesehen, dass das Minimum der Pitchkennlinie ein im mathematischen Sinne lokales Minimum ist, insbesondere bei dem lokalen Minimum der Blattwinkel ($\alpha(\rho 0)$) im Vergleich zu einem ersten Blattwinkel ($\alpha>(\rho>)$) einer geringfügig gegenüber der Normatmosphäre erhöhten Luftdichte ($\rho>$) und im Vergleich zu einem zweiten Blattwinkel ($\alpha<(\rho<)$) einer geringfügig gegenüber der Normatmosphäre erniedrigten Luftdichte ($\rho<$) am kleinsten ist.

Vorzugsweise kann das Minimum ein im mathematischen Sinne globales Minimum sein, wobei bei dem globalen Minimum der Blattwinkel ($\alpha(\rho 0)$) der absolut kleinste Blattwinkel der gesamten Pitchkennlinie ($K\alpha$) ist.

Vorzugsweise ist vorgesehen, dass

- die Luftdichte eine aktuelle Luftdichte am Ort der Windenergieanlage ist, insbesondere eine transient oder in Intervallen wiederholt angepasste Luftdichte ist, vorzugsweise die angepasste Luftdichte am Standort transient oder in vorbestimmten Intervallen wiederholt gemessen ist. Vorzugsweise ist vorgesehen, dass die Luftdichte die aktuelle Luftdichte am Standort der Windenergieanlage ist, wobei das Einstellen des Blattwinkels gemäß der von der Luftdichte abhängigen Pitchkennlinie dynamisch angepasst wird.

Es kann auch vorteilhaft vorgesehen sein, dass die Luftdichte eine standortbezogene generell vorherrschende Luftdichte ist, insbesondere eine für den Standort als maßgebliche, variable aber fest vorgegebene Luftdichte ist, die einmal oder wiederholt bestimmt ist, vorzugsweise als mittlere Luftdichte am Standort vorgegeben ist. Vorzugsweise ist die Luftdichte die standortbezogene generell vorherrschende Luftdichte, wobei das Einstellen des Blattwinkels gemäß der von der Luftdichte abhängigen Pitchkennlinie statisch angepasst wird.

Vorzugsweise ist vorgesehen, dass die Pitchkennlinie ein Teil eines Kennlinienfeldes ist, in dem zur Berücksichtigung unterschiedlicher Luftdichten mehrere Pitchkennlinien entsprechend unterschiedlicher Referenzdichten ($\rho 0$) hinterlegt sind und aus den hinterlegten Pitchkennlinien in Abhängigkeit der erfassten Luftdichte die Pitchkennlinie ausgewählt wird und zum Einstellen des Blattwinkels verwendet wird.

Es kann auch vorgesehen sein, dass bei der Pitchkennlinie entsprechend der Referenzdichte zur Berücksichtigung unterschiedlicher Luftdichten eine hinterlegte Pitchkennlinie in Abhängigkeit der erfassten Luftdichte skaliert wird, insbesondere mit einem Skalierungsfaktor eines Verhältnisses aus der erfassten Luftdichte zu der Referenzdichte ($\rho 0$), und zum Einstellen des Blattwinkels verwendet wird.

Vorteilhaft ist es auch möglich, dass bei der Pitchkennlinie entsprechend der Referenzdichte zur Berücksichtigung unterschiedlicher Luftdichten die Pitchkennlinie, welche den Blattwinkel als Funktion der Ausgangsleistung und/oder des Drehmoments und/oder der Rotordrehzahl und in Abhängigkeit der Luftdichte angibt,

- in Abhängigkeit der erfassten aktuellen oder vorherrschenden Luftdichte angibt, und zum Einstellen des Blattwinkels verwendet wird.

Vorzugsweise ist vorgesehen, dass sich der Verlauf des Minimums des Blattwinkels mit der Ausgangsleistung ändert. Eine prinzipiell veranschaulichende Darstellung dieses besonders bevorzugten Zusammenhangs ist in Fig.7 gezeigt. Darin ist insbesondere ersichtlich, dass bevorzugt

- der Verlauf des Minimums des Blattwinkels bei einer höheren Leistung (P1) flacher ausgeprägt ist als bei einer geringeren Leistung (P3), und/oder

- ein Bereich der Pitchkennlinie eines abgesenkten Blattwinkels um das Minimum zwischen einer erhöhten Luftdichte ($\rho$>) und einer erniedrigten Luftdichte (p<) bei einer höheren Leistung (P1) größer ist als bei einer geringeren Leistung (P3).

Vorzugsweise ist vorgesehen, dass die Pitchkennlinie den einzustellenden Blattwinkel für den Teillastbetrieb angibt und/oder für einen Übergang von einem Teillast- in einen Nennlastbetrieb, wobei in dem Teillastbetrieb, der Wind derart schwach ist, dass die Windenergieanlage noch nicht mit ihrer maximalen Ausgangsleistung betrieben werden kann.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugzeichen verwendet.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:

Fig.1      eine bevorzugte Ausführungsform einer Windenergieanlage;

Fig.2      eine bevorzugte Ausführungsform eines Aspekts einer Pitchkennlinie (Zusammenhang zwischen Blattwinkel (Pitchwinkel) und Leistung) gemäß dem Konzept der Erfindung, wobei die Pitchkennlinie bei konstanter Leistung in Abhängigkeit von der Luftdichte bei einer Referenzdichte $\rho 0$ --die vorliegend der Normdichte p_norm einer Normatmosphäre entsprechen soll im allgemeinen aber eine Referenzdichte $\rho 0$ als "Cold Climate"-Luftdichte sein kann (also beispielsweise eine Referenzdichte $\rho 0$ mit p>=1,3 kg/m$^3$)-- ein hier globales Minimum ($\alpha 0$) aufweist;

Fig.3      zwei beispielhaft dargestellte Pitchkennlinien als typischer Zusammenhang zwischen Blattwinkel (Pitchwinkel) und Leistung gemäß dem Konzept der Erfindung im Vergleich zu einer Pitchkennlinie des Standes der Technik bei Normdichte;

Fig.4      drei beispielhaft dargestellte Pitchkennlinien als typischer Zusammenhang zwischen Blattwinkel (Pitchwinkel) und Leistung gemäß dem Konzept der Erfindung bei unterschiedlichen Dichten;

Fig.5      eine bevorzugte Ausführungsform eines Pitchkennlinien-Feldes umfassend eine Mehrzahl von Pitchkennlinien unter Berücksichtigung des Aspekts, dass die Pitchkennlinien (Zusammenhang zwischen Blattwinkel (Pitchwinkel) und Leistung) in Abhängigkeit von der Luftdichte bei einer Referenzdichte $\rho 0$ --die vorliegend der Normdichte p_norm einer Normatmosphäre entsprechen soll im allgemeinen aber eine Referenzdichte $\rho 0$ als "Cold Climate"-Luftdichte sein kann (also beispielsweise eine Referenzdichte $\rho 0$ mit p>=1,3 kg/m$^3$)-- ein hier globales Minimum ($\alpha 0$) aufweisen;

Fig.6      ein Vergleich eines symbolisch und beispielhaft dargestellten Turmfreigangs (TF) unter Darstellung eines verminderten Turmfreigangs bei kleineren Dichten und eines im Wesentlichen konstanten geringen Turmfreigangs auch bei größeren Dichten gemäß einer Pitchkennlinie gemäß dem Konzept der Erfindung;

Fig.7    eine Schar von Pitchkennlinien für unterschiedliche Leistungen, wobei das Minimum umso ausgeprägter ist, desto geringer die Leistung ist;

Fig.8    eine bevorzugte Ausführungsform einer Steuer- und Regelungseinrichtung in vereinfachter Struktur zum Durchführen eines Einstellens eines Blattwinkels im Teillastbetrieb bis zur Nennlast, in Abhängigkeit der Ausgangsleistung -und ggfs. Drehzahl-- und der erfassten Luftdichte.

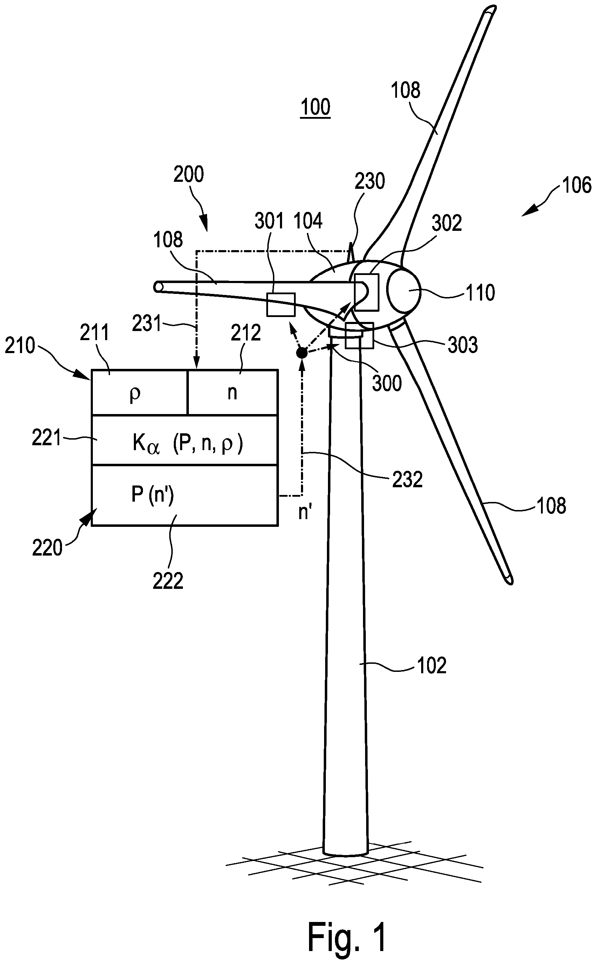

Fig.1 zeigt als Beispiel eine bevorzugte Ausführungsform einer Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Eine Windenergieanlage der Fig.1 oder eine jede Windenergieanlage eines Windparks oder auch der Windpark ist vorliegend mit einer Einrichtung 200 zum Steuern und/oder Regeln (Steuer- und Regeleinrichtung 200) als Teil einer Betriebsführung mit einem oder mehreren Reglern 220 ausgestattet, die vorliegend wenigstens einen Leistungsregler 222 umfassen. Diese Regler 220 steuern eine Stelleinrichtung 300 mit entsprechender Aktorik bzw. Stellgliedern 301, 302, 303 für beispielsweise einen Blattwinkel eines oder der Rotorblätter gemäß einer Pitchkennlinie und/oder einen Erregerstrom des Generators in der Gondel und/oder einen Azimuth-Winkel der Gondel der Windenergieanlage 100.

Die Steuer- und Regeleinrichtung 200 erhält gemäß Fig.1 Messinformationen von einer Sensorik 230 über eine Signalleitung 231, welche an ein Messmodul 210 der Steuer- und Regeleinrichtung 200 gehen. Die Sensorik 230 für die Windenergieanlage erfasst relevante Umgebungsvariablen umfassend wenigstens die für die Windenergieanlage relevante Luftdichte und/oder Temperatur und/oder für die Luftdichte ein Luftdruck und eine Lufttemperatur als weitere relevante Umgebungsvariablen in der Umgebung der Windenergieanlage, um daraus die Luftdichte zu bestimmen.

Somit hat die Sensorik 230 und/oder dieses Messmodul 210 wenigstens eine erste Ermittlungseinheit 211 zur Ermittlung einer Dichte und eine zweite Ermittlungseinheit 212 zur Ermittlung der Drehzahl n eines Rotors der Windenergieanlage. Auch können Parameter wie Blattbiegung etwa mit einem Dehnmessstreifen und/oder ein Turmfreigang der Windenergieanlage mit einem Abstandssensor über den Abstand zwischen einer Turmaußenwand und einer Blattspitze des Rotorblattes gemessen werden.

Des Weiteren ist als Teil der Regler 220 neben vorliegend dem Leistungsregler 222 eine Vorsteuereinheit 221 --z. B. eine Recheneinheit oder dergleichen mit einer oder mehreren hinterlegten Betriebskennlinien umfassend wenigstens ein Luftdichte abhängiges Pitchkennlinienfeld $K\alpha$ (P,n, p) mit einer von der Luftdichte abhängigen Pitchkennlinie $K\alpha,\rho$ vorgesehen, die insbesondere in der Lage ist, eine angepasste Drehzahl n entsprechend einer Dichte-angepassten Betriebskennlinien-Feld $K\alpha$ (P, n, p) vorzugeben für vorliegend den Leistungsregler 222.

Die so angepasste und/oder korrigierte Drehzahl n' -also eine gemäß Vorsteuereinheit 221 von einer Drehzahl n auf eine Drehzahl n' angepasste Drehzahl n', die zusätzlich oder alternativ gemäß einer dichteangepassten Leistung P korrigierbar ist-- kann über eine weitere Signalleitung 232 an die Windenergieanlage 100 und die entsprechende Stelleinrichtung 300 derselben gegeben werden.

Wie eingangs genannt, werden aktuell Leistungsberechnungen für eine WEA unter Annahme der Normatmosphäre durchgeführt. Die dabei verwendete Norm-Dichte p_norm für die Referenzdichte $\rho0$ beträgt p_norm=1,225 kg/m$^3$. Jedenfalls an Standorten in großer Höhe und/oder bei "Cold Climate"-Bedingungen mit im Mittel niedrigeren Temperaturen stimmt diese Annahme quantitativ aber nicht mehr und es können durchaus Abweichungen in der Dichte bis ca. 30% von den Auslegebedingungen basierend auf der verwendeten Norm-Dichte p_norm auftreten. Im Unterschied zum Stand der Technik ist vorgesehen, dass die Pitchkennlinie eine von der Luftdichte abhängige Pitchkennlinie $K\alpha,\rho$ ist, wobei die Pitchkennlinie in Abhängigkeit von der Luftdichte bei einer Normdichte einer Norm-atmosphäre ein lokales Minimum $\alpha0$ aufweist. Grundsätzlich ist vorgesehen, dass im Bereich einer für den Standort geltenden Referenzdichte $\rho0$ einer Standortatmosphäre --die vorliegend in diesem Ausführungsbeispiel der Normdichte p_norm einer Normatmosphäre entsprechen soll im allgemeinen aber eine Referenzdichte $\rho0$ als "Cold Climate"-Luftdichte sein kann (also beispielsweise eine Referenzdichte $\rho0$ mit p>=1,3 kg/m$^3$)-- ein Minimum vorgesehen ist.

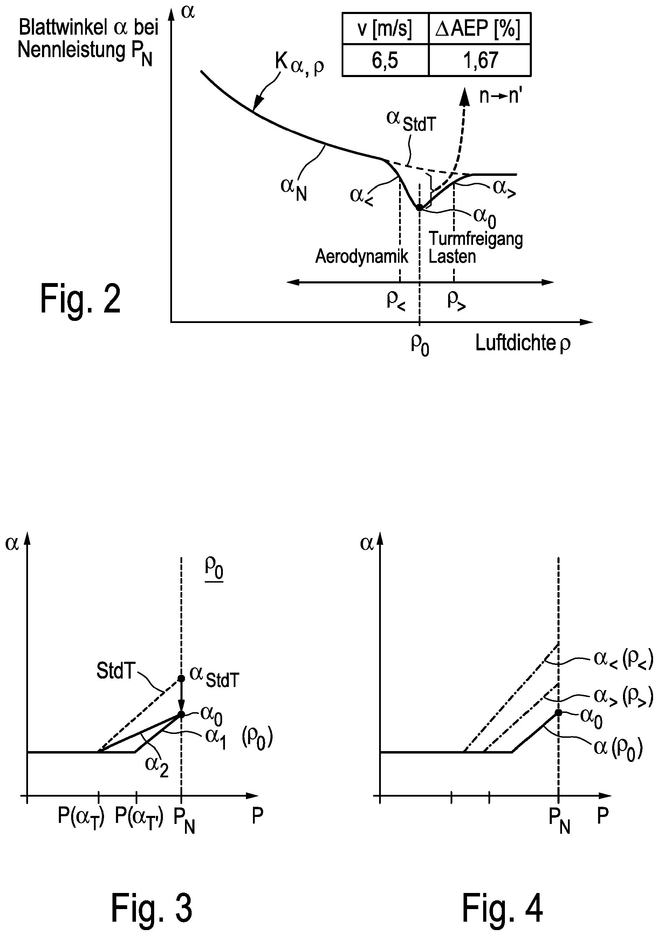

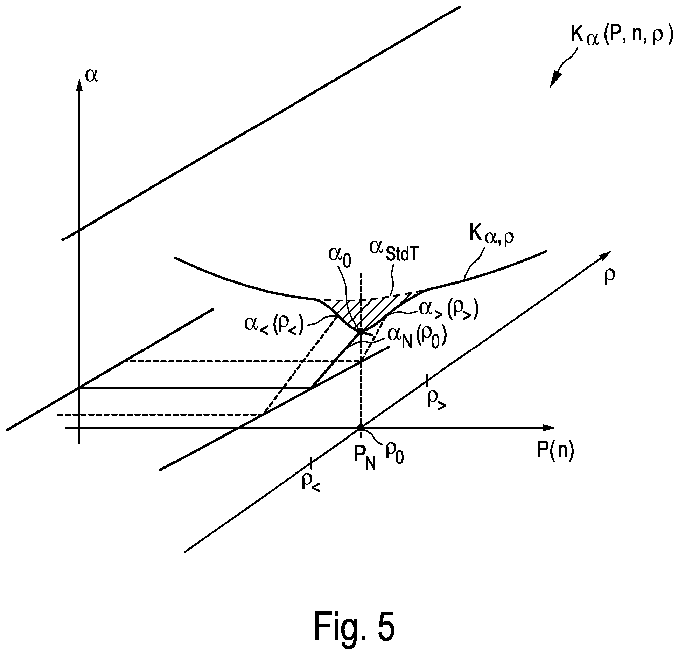

Fig.2 zeigt bei diesem Ausführungsbeispiel eine gemäß dem Konzept der Erfindung von der Luftdichte abhängige Pitchkennlinie $K\alpha,\rho$, vorliegend als Teil eines in Bezug auf Fig.1 erwähnten Kennlinienfeldes $K\alpha$ (P, n, p), das noch anhand von Fig.5 erläutert wird. Das Kennlinienfeld $K\alpha$ (P, n, p), das den Blattwinkel als Funktion der Ausgangsleistung und/oder des Drehmomentes und/oder der Rotordrehzahl angibt, dient vor allem zum Einstellen eines Blattwinkels $\alpha$ einer Windenergieanlage 100 der Fig.1 unter Vorgabe dieser Luftdichte abhängigen Pitchkennlinie $K\alpha,\rho$. Die Windenergieanlage 100 hat zur Berücksichtigung der unterschiedlichen Luftdichten an einem von kaltem Klima geprägten Standort genau diese von der Luftdichte abhängige Pitchkennlinie $K\alpha,\rho$ in ihrer Betriebsführung implementiert. Die Pitchkennlinie $K\alpha,\rho$ ist vorliegend beispielhaft als Teil eines Kenn-

linienfeldes $K\alpha$ (P, n, ρ) angegeben, dessen Details des Weiteren in Fig.3 und Fig.4 erläutert sind.

Vorzugsweise ist die Referenzdichte ρ0 einer Standortatmosphäre eine Normdichte einer Normatmosphäre oder es kann an einem von kaltem Klima geprägten Standort die Referenzdichte ρ0 eine "Cold Climate"-Luftdichte sein.

Generell erfolgt eine Auslegung der Windenergieanlage, insbesondere eines Blattes der Windenergieanlage, auf eine bestimmte Luftdichte am Standort, nämlich die Referenzdichte. Ein Standort erfährt jedoch auch eine Bandbreite von Luftdichten um die Referenzdichte herum, vor allem infolge von Temperaturschwankungen. Die Referenzdichte kann beispielsweise eine mittlere Luftdichte am Standort sein. So umfasst der Bereich des Minimums bei der Referenzdichte der Standortatmosphäre eine Luftdichte, die +/- 10%, insbesondere +/- 5%, von der Referenzdichte abweicht. Ist die Referenzdichte am Standort die Normdichte einer Normatmosphäre umfasst der Bereich des Minimums bei der Normdichte der Normatmosphäre eine Luftdichte, die +/- 10%, insbesondere +/- 5% von der Normdichte abweicht.

Im vorliegenden Fall der Ausführungsbeispiele wird der Einfachheit angenommen, dass die Referenzdichte ρ0 der Dichte entspricht für "Cold Climate"- Bedingungen. D.h. bei einem von einem kalten Klima geprägten Standort der Windenergieanlage. Beispielsweise liegt dessen mittlere Temperatur über das Jahr unter 0°C, insbesondere unter -15°C liegt und/oder dessen minimale Temperatur liegt über das Jahr in einem Bereich unter -15°C, insbesondere unter -20°C., Beispielsweise kann eine Referenzdichte ρ0 mit p>=1,3 kg/m³ bei einem von einem kalten Klima geprägten Standort der Windenergieanlage vorliegen.

Es gelten die Ausführungen wie im Folgenden für eine Normdichte p_norm erläutert generell für eine Referenzdichte p0, wobei in den Figuren auf die Referenzdichte ρ0 Bezug genommen ist.

Zunächst Bezug nehmend auf Fig.2 zeigt diese eine bei einer konstanten Leistung, hier bei der Nennleistung, aufgetragene von der Luftdichte abhängige Pitchkennlinie $K\alpha,\rho$ mit einem Verlauf in Abhängigkeit von der Luftdichte, der bei einer Referenzdichte ρ0 (hier beispielhaft entsprechend einer Normdichte einer Normatmosphäre) ein lokales Minimum $\alpha0$ aufweist. Die von der Luftdichte abhängige Pitchkennlinie $K\alpha,\rho$ zeigt insofern einen im Teillastbetrieb relevanten Blattwinkel $\alpha$ in Abhängigkeit der Luftdichte ρ, der auch beim Übergang von Teillast- in den Nennlastbetrieb relevant ist und wobei $\alpha0$ den besagten Blattwinkel $\alpha$ bei einer Normdichte p_norm also 1,225 kg/m³ zeigt oder beispielsweise allgemein bei einer Referenzdichte ρ0 (z.B. eine "Cold Climate"-Luftdichte mit beispielsweise p>=1,3 kg/m³) bei einem von einem kalten Klima geprägten Standort der Windenergieanlage.

Das lokale Minimum der Blattwinkel zeichnet sich dadurch aus, dass der Blattwinkel $\alpha0$ bei einer Referenzdichte ρ0 im Vergleich zu einem ersten Blattwinkel $\alpha>$ als auch im Vergleich zu einem zweiten Blattwinkel $\alpha<$ am kleinsten ist. Der Blattwinkel $\alpha>$ ist dabei derjenige Blattwinkel $\alpha$ bei Nennleistung P_N, welcher bei einer geringfügig gegenüber der Normatmosphäre erhöhten Luftdichte p> vorgesehen ist und der zweite Blattwinkel $\alpha<$ ist derjenige Blattwinkel, welcher bei einer geringfügig gegenüber der Normatmosphäre erniedrigten Luftdichte p< bei Nennleistung P_N vorgesehen ist.

Der erste und der zweite Blattwinkel $\alpha>$, $\alpha<$ ist vorliegend beispielhaft gezeigt. D.h. konkret ergibt sich der Verlauf der von der Luftdichte abhängigen Pitchkennlinie $K\alpha,\rho$ derart, dass der Blattwinkel $\alpha$ bei Nennleistung P_N auf der von der Luftdichte abhängigen Pitchkennlinie $K\alpha,\rho$ ausgehend von einer Referenzdichte ρ0 mit abnehmender als auch mit zunehmender Luftdichte ρ ansteigt, das heißt von $\alpha0$ auf $\alpha<$ in Richtung kleinerer Dichten (im Vergleich zu der Referenzdichte ρ0) als auch auf $\alpha>$ in Richtung größerer Dichten (im Vergleich zu der Referenzdichte ρ0) ansteigt.

Dies ist jedenfalls der Fall für kleinere und größere Luftdichten p<, p>. Unter einer geänderten Luftdichte p<, p>, wird vorliegend eine von der Normdichte p_norm (oder beispielsweise allgemein eine von der Referenzdichte ρ0 (z.B. mit p>=1,3 kg/m³) bei einem von einem kalten Klima geprägten Standort der Windenergieanlage) abweichende Luftdichte im Bereich von 5%, bis ggfs. zu 10 %, angesehen.

Die von der Luftdichte abhängige Pitchkennlinie $K\alpha,\rho$ ist vorliegend in einer durchgezogenen Linie in Fig.2 gezeigt, im Vergleich zu einer gestrichelt dargestellten Pitchkennlinie $K\alpha$ gemäß dem Stand der Technik. Der Verlauf der üblichen Pitchkennlinie $K\alpha$ im Bereich der Normdichte wie auch im übrigen Bereich außerhalb der Normdichte ist durchgehend monoton fallend. Das heißt, ein Blattwinkel $\alpha$_StdT gemäß dem Stand der Technik weist weder bei einer Referenzdichte ρ0 (z.B. Normdichte p_norm oder "Cold-Climate"-Luftdichte wie z.B. p>=1,3 kg/m³ oder ähnlich) noch im Bereich zwischen p< und p> den Verlauf eines lokalen Minimums auf, sondern ist weiterhin monoton fallend zu größeren Luftdichten hin.

Unter einem von kalten Klima geprägten Standort einer Windenergieanlage ist vorstehend ein Standort zu verstehen, der bei diesem Ausführungsbeispiel eine mittlere Temperatur über das Jahr von 0 °C hat und/oder dessen minimale Temperatur über das Jahr in einem Bereich unter -20 °C liegt und mit einer "Cold Climate"-Luftdichte mit beispielsweise p>=1,3 kg/m³. Die Erfindung hat nun erkannt, dass sich bei einem solchen Standort die gemäß dem Stand der Technik übliche Abhängigkeit einer Luftdichte als eine durchgehend streng monoton fallende Funktion --mit gegebenenfalls ab der Referenzdichte, insbesondere Normluftdichte, bei steigenden Dichten konstant gehaltenem Blattwinkel-- unvorteilhaft ist in Bezug auf folgende Problematik.

Zum einen ist es so, dass bei Luftdichten unterhalb der Referenzdichte p0, das heißt bei einer Luftdichte p< infolge der abnehmenden Luftdichte die Tendenz für Strömungsablösungen am Rotorblatt steigt. Gemäß dem Konzept der Erfindung wird diesem von $\alpha0$ ausgehend mit erhöhten Blattwinkel entgegengewirkt für geringe Luftdichten p<.

Des Weiteren ist gemäß dem Konzept der Erfindung erkannt worden, dass für Luftdichten oberhalb der Referenzdichte $\rho0$ mit zunehmender Luftdichten p> die Lasten am Rotorblatt steigen und insofern die Gefahr einer übermäßigen Blattdurchbiegung gegebenenfalls zu kleinem Turmfreigang besteht, infolge der gestiegenen Luftdichte. Gemäß dem Konzept der Erfindung wird diesem entgegengewirkt mit, ausgehend von der Referenzdichte $\rho0$, steigendem Blattwinkel. Das heißt gemäß der von der Luftdichte abhängigen Pitchkennlinie K$\alpha$,$\rho$ wird das Rotorblatt mit zunehmender Luftdichte, ausgehend von dem lokalen Minimum bei ($\rho0$, $\alpha0$) mit einem dann jedenfalls bis zu einem Wert $\rho>$ zunehmenden Blattwinkel eingestellt. Das heißt, das Rotorblatt wird infolge des zunächst ausgehend von dem lokalen Minimum zunehmenden Blattwinkel zwischen $\alpha0$ und $\alpha>$ in Richtung einer Fahnenstellung bewegt.

Dieses gemäß dem Konzept der Erfindung vorgesehene Verhalten gemäß der von der Luftdichte abhängigen Pitchkennlinie K$\alpha$,$\rho$ wirkt damit einerseits einer Strömungsablösung am Rotorblatt bei Luftdichten unterhalb der Referenzdichte $\rho0$ entgegen und zum anderen werden für Luftdichten oberhalb der Referenzdichte $\rho0$ Lasten begrenzt und gewährleisten einen ausreichenden Turmfreigang.

Des Weiteren hat das Konzept der Erfindung erkannt, dass bei einer solchen Maßnahme einer luftdichteabhängigen Pitchkennlinie K$\alpha$,$\rho$ mit einem lokalen Minimum bei ($\rho0$, $\alpha0$) die Möglichkeit eines Ertragsgewinns bei solchermaßen verringerten Blattwinkel $\alpha0$ gegenüber einem Blattwinkel des Standes der Technik $\alpha$_StdT besteht.

In Fig.2 ist ein Rechenbeispiel bei einer mittleren Windgeschwindigkeit von 6,5 m/s gegeben. Dieses würde nach einer Vergleichsrechnung einen jährlichen Ertragsgewinn von 1,67 % bewirken, infolge dieser Maßnahme.

Das Konzept der Erfindung bietet damit im Rahmen einer bedarfsmäßigen weiteren Anpassung nicht nur aerodynamische Vorteile und eine Lastverringerung am Rotorblatt, sondern darüber hinaus auch einen Ertragsgewinn, was in dieser Kombination erreicht wird durch die von der Luftdichte abhängige Pitchkennlinie mit einem lokalen Minimum bei ($\alpha0$, $\rho0$) im Bereich der Referenzdichte $\rho0$ (also allgemein eine Dichte wie z.B. mit $\rho>=1,3$ kg/m$^3$ bei einem von einem kalten Klima geprägten Standort der Windenergieanlage oder wie z.B. eine Normdichte p_norm).

Das Konzept der Erfindung ist vorliegend im Rahmen einer solchen Pitchkennlinie K$\alpha$,$\rho$ erläutert, die als abhängige Kennlinie zum Steuern der Windenergieanlage gemäß Fig.1 eingehalten werden kann. Es ist gleichwohl möglich, diese Pitchkennlinie als Vorsteuerung vorzugeben, um dann die Windenergieanlage ausgehend von dieser Pitchkennlinie weiterzusteuern und/oder zu regeln.

Fig.3 zeigt dazu beispielsweise für ein Verfahren zur Blattwinkelanpassung den Verlauf einer Pitchkennlinie K$\alpha$. Hier findet ein Vorpitchen mit zunehmender Leistung P aus dem Teillastbereich unterhalb von P_N zum Nennlastbereich bei und oberhalb von P_N statt. Dabei wird ab einer bestimmten Leistung P($\alpha$T) oder P($\alpha$T') der minimale Blattwinkel $\alpha$T des Teillastbereiches erhöht bis zu einem Blattwinkel $\alpha$_StdT bei Nennlast P_N bei der hier beispielhaft angenommenen Referenzdichte $\rho0$.

Bei der hier vorliegenden Ausführungsform gemäß dem Konzept der Erfindung ist vorgesehen, dass -- wie durch den Pfeil in Fig.3 gekennzeichnet-- der Wert des Blattwinkels $\alpha$_StdT herabgesetzt ist auf einen Wert $\alpha0$ bei Referenzdichte $\rho0$ (also allgemein eine Dichte wie z.B. mit $\rho>=1,3$ kg/m$^3$ bei einem von einem kalten Klima geprägten Standort der Windenergieanlage oder wie z.B. eine Normdichte p_norm wie dies in Anfang Fig.2 erläutert wurde).

Gleiches kann darüber hinaus auch in einem Bereich zwischen p< und p>, also mit Blattwinkeln $\alpha<$ und $\alpha>$ in einem Bereich um die Referenzdichte $\rho0$ herum, vorgesehen sein. Auch kann der Verlauf des Vorpitchvorgangs ausgehend von einem $\alpha$T oder einem anderen Winkel $\alpha$T' so erfolgen, dass entweder der Schwellenwert der Leistung auf einen erhöhten Schwellenwert P($\alpha$T') geändert wird (Verlauf von $\alpha$_1) oder aber die Steigung ausgehend vom ersten Schwellenwert P($\alpha$T) geringer ist (Verlauf $\alpha$_2); eine Kombination dieser Maßnahmen ist ebenfalls möglich.

In beiden Fällen endet der Verlauf der Pitchkennlinie, das heißt die Anpassung des Blattwinkels als Funktion der Leistung der Windenergieanlage P, so, dass bei Nennlast P_N der bei Normdichte vorliegende Blattwinkel $\alpha0$ unterhalb dem des Standes der Technik $\alpha$_StdT liegt aufgrund des lokalen Minimums der Luftdichte abhängigen Pitchkennlinie.

Fig.4 zeigt dazu eine Kennlinienschar K$\alpha$,$\rho$ gemäß dem Konzept der Erfindung, das heißt Verläufe von Blattwinkeln $\alpha$ wie in Fig.2 beispielsweise auch als Verläufe von Blattwinkeln $\alpha<$ und $\alpha>$ bei von der Referenzdichte $\rho0$ (z.B. eine Dichte wie z.B. mit $\rho>=1,3$ kg/m$^3$ bei einem von einem kalten Klima geprägten Standort der Windenergieanlage oder wie z.B. eine Normdichte p_norm) abweichenden Dichten, d. h. kleinerer Dichte $\rho<$ und größerer Dichte $\rho>$, zur Verdeutlichung eines Vorpitchens aus dem Teillastbereich bei einer Leistung P unterhalb der Nennleistung P_N. So gibt der Verlauf $\alpha$ den bereits in Fig.3 angegebenen Verlauf wieder in Abhängigkeit der Leistung. Entsprechend gilt dies für die Verläufe $\alpha<$ und $\alpha>$ an den in Fig.2 gekennzeichneten Stellen $\alpha<$ und $\alpha>$.

Fig.5 zeigt in der Zusammenschau ein den Prinzipien des Konzepts der Erfindung folgendes Kennlinienfeld K$\alpha$ (P, n, $\rho$) schematisch, wobei die in Fig.2 gezeigte Pitchkennlinie K$\alpha$,$\rho$ Teil dieses Kennlinienfeldes

K$\alpha$ (P, n, $\rho$) ist. Die in Fig.5 eingezeichnete Kennlinie K$\alpha$,$\rho$ bei konstanter Nennleistung P_N entspricht der in Fig.2 dargestellten Pitchkennlinie K$\alpha$,$\rho$.

Das Kennlinienfeld K$\alpha$ (P, n, $\rho$) umfasst generell darüber hinaus Kennlinien K$\alpha$,$\rho$ nicht nur für eine Referenzdichte $\rho$0, sondern auch für darunter und darüber liegende Dichten $\rho$< und $\rho$> mit entsprechenden Verläufen $\alpha$< und $\alpha$>, die in Fig.5 für das Kennlinienfeld K$\alpha$ (P, n, p) beispielhaft eingezeichnet sind.

In allen im schraffierten Bereich des Kennlinienfeldes erkennbaren Fällen zwischen einer kleineren und einer größeren Dichte $\rho$< und $\rho$> kann die Nenndrehzahl insofern generell und/oder beim Übergang von einem Teillast- in den Nennlastbereich erhöht werden, was der Ertragssteigerung bei Nennlast und auch im Bereich darüber zuträglich sein kann. Eine Erhöhung der Nenndrehzahl in einem Bereich unterhalb der Referenzdichte $\rho$0 ist grundsätzlich vorteilhaft.

Eine Erhöhung der Nenndrehzahl erweist sich jedoch auch in einem Bereich oberhalb der Referenzdichte $\rho$0 als möglich unter Berücksichtigung der Randbedingungen betreffend einen Turmfreigang TF. So sollte eine Erhöhung der Nenndrehzahl in dem schraffierten Bereich des Kennlinienfeldes -also generell im Bereich eines abgesenkten Blattwinkels auf der von der Luftdichte abhängigen Pitchkennlinie (vorliegend jedenfalls zwischen p< und p> mit entsprechenden Werten $\alpha$< und $\alpha$>)-- insbesondere mit der Maßgabe erfolgen, dass die Nenndrehzahl grundsätzlich eine streng monoton fallende Funktion in Abhängigkeit einer zunehmenden Dichte ist.

Grundsätzlich ist es möglich, mit einem solchen Kennlinienfeld in verschiedenster Weise umzugehen. Die Betriebsführung einer Windenergieanlage weist dazu bevorzugt eine Drehzahl-/Leistungs-Betriebskennlinie (n/P-Betriebskennlinie) auf, wobei in einem ersten beispielhaften Fall die angepasste Betriebskennlinie vorgegeben wird in Abhängigkeit der für die Windenergieanlage relevanten Luftdichte mittels der hier dargestellten luftdichteabhängigen Pitchkennlinie K$\alpha$,$\rho$. Dann wird die Windenergieanlage zum Erzeugen der abzugebenden Leistung auf Basis der angepassten Drehzahl-/Leistungs-Betriebskennlinie (n/P-Betriebskennlinie) in der Betriebsführung betrieben. In einer Variante kann die Windenergieanlage zum Erzeugen einer Leistung auf Basis einer angepassten Drehzahl-/Drehmoment-Betriebskennlinie in der Betriebsführung betrieben werden.

Es kann in beiden Varianten eine vorgegebene, angepasste aktuelle Drehzahl n in der Betriebsführung vorgegeben werden und danach mittels einer Steuerung und/oder Regelung eingestellt werden. Insbesondere bietet sich gemäß dem Konzept der Erfindung die hier dargestellte Erhöhung der Drehzahl im Bereich zwischen $\rho$<, $\rho$> bzw. $\alpha$< und $\alpha$> an; jedenfalls für Teillast-Betrieb und den Übergang zur Nennlast.

In einer abgewandelten Vorgehensweise kann in einem zweiten beispielhaften Fall zunächst die Drehzahl des Rotors unter Berücksichtigung einer vorbestimmten Referenzdichte $\rho$0, also z.B. einer Dichte wie z.B. mit $\rho$>=1,3 kg/m$^3$ bei einem von einem kalten Klima geprägten Standort der Windenergieanlage oder wie z.B. einer Normdichte p_norm einer Normatmosphäre eingestellt werden oder vorgegeben werden, und es kann anschließend die angepasste Drehzahl unter Berücksichtigung der für die Windenergieanlage relevanten Luftdichte, ggfs. auch einer Lufttemperatur, vorgegeben werden. Dies kann gemäß dem Aspekt einer Luftdichte-Abhängigkeit einer Pitchkennlinie (Zusammenhang zwischen Leistung und Blattwinkel oder in einer Variante Drehmoment und Blattwinkel) K$\alpha$,p; das heißt für gegebenenfalls sich dynamisch ändernde Luftdichten p< oder p> erfolgen.

Die Windenergieanlage kann in beiden genannten ersten und zweiten Fällen also zum Erzeugen einer abzugebenden Leistung (in einer Variante Drehmoment) eingestellt werden unter Vorgabe der angepassten Drehzahl n', die jedenfalls im Bereich des Minimums des Blattwinkels von n auf n' angepasst, nämlich erhöht, sein kann. Die Windenergieanlage kann im Teillastbereich und/oder Nennlastbereich drehzahlgeregelt werden.

Dies kann, insbesondere im Nennlastbereich, gegebenenfalls unter Einstellen zusätzlich oder alternativ des Generators unter Einstellen eines Erregerstroms, vorzugsweise des Generatorläufers, geschehen. Dies kann zusätzlich oder alternativ unter Einstellen eines oder mehrerer Rotorblätter entsprechend den erläuterten Vorgaben einer Pitchkennlinie zur Einstellung eines Blattwinkels geschehen. Zusätzlich oder alternativ kann auch ein Azimuthwinkel für die Gondel der Windenergieanlage eingestellt werden.

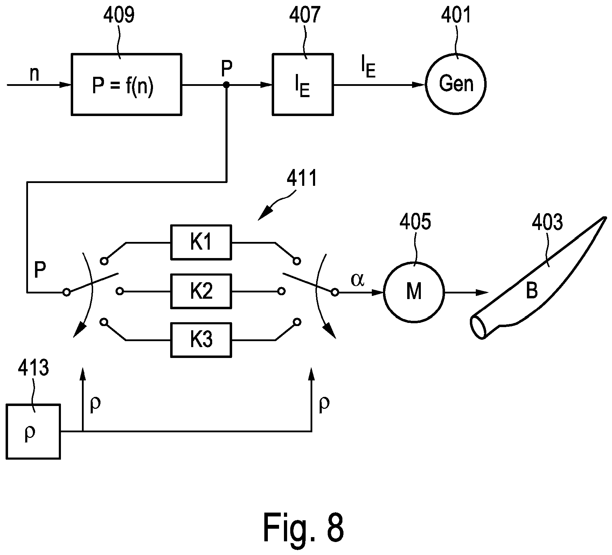

In Bezug auf Fig.8 wird weiter im Rahmen einer besonders bevorzugten Ausführungsform konkret das Steuern und Regeln einer Windenergieanlage beispielhaft erläutert am Beispiel einer Schar von luftdichteabhängigen Pitchkennlinien K$\alpha$,$\rho$, die in Fig.8 als K1, K2, K3 bezeichnet sind und als Teil eines Kennlinienfeldes K$\alpha$ (P, n, p) zu sehen sind.

Fig.6 zeigt gemäß dem Konzept der Erfindung im Rahmen eines Vergleichs einen symbolisch und beispielhaft dargestellten Turmfreigang TF. Im Stand der Technik wird ein Turmfreigang TF normalerweise bei einem Wert p> nicht konstant sein, sondern weiter abnehmen und idealerweise erst bei einem recht hohen Dichtewert von p=1,3 kg/m$^3$ sein Minimum erreichen. Im Vergleich also zu einem Turmfreigang für eine in Fig.6 dargestellte Pitchkennlinie $\alpha$_StdT des Standes der Technik kann gemäß dem Konzept der Erfindung ein verminderter Turmfreigang jedenfalls schon bei kleineren Dichten eingestellt werden; dies ist bei einer Dichte $\rho$< durch einen Pfeil nach unten kenntlich gemacht. Der Verlauf des Turmfreigangs TF mündet mit zunehmender Dichte kurz vor der Referenzdichte $\rho$0 -- insbesondere einer Normdichte p_norm oder ggfs. einer Dichte wie z.B. mit $\rho$>=1,3 kg/m$^3$ bei einem von einem kalten Klima geprägten Standort der Windenergieanlage-- hier etwa in einem Bereich von 5% unterhalb der Referenzdichte p0, in einen geringen, vorzugsweise minimalen Wert. Der Verlauf des Turmfreigangs TF führt bei dieser Ausführungsform auch bei größeren Dichten p> zu einem im Wesentlichen konstanten geringen Turmfreigangs auch bei den größeren Dichten gemäß einer Pitchkennlinie gemäß dem Konzept der Erfindung. Vorzugsweise ist demnach weiter vorgesehen, dass die von der Luftdichte abhängige Pitchkennlinie derart verläuft, dass der minimale Turmfreigang beim Einstellen des Blattwinkels unter Vorgabe wenigstens der Pitchkennlinie wenigstens für eine erhöhte Luftdichte erhalten bleibt. Mit den Maßnahmen des Konzepts der Erfindung kann zusätzlich oder alternativ auch ein Turmfreigang für erniedrigte Luftdichte gesenkt werden.

Fig.7 zeigt eine Schar von Pitchkennlinien für unterschiedliche Leistungen P1, P2 und P3. Fig.7 soll in schematischer Form anhand eines prinzipiellen Verlaufs der drei gezeigten Pitchkennlinien für unterschiedliche Leistungen P1, P2 und P3 verdeutlichen, dass das Potenzial für eine Nenndrehzahl- und/oder Nennleistungs-Erhöhung umso größer ist im Bereich einer Blattwinkel-Absenkung. Insbesondere kann dies in einem vorteilhaft ausgewogenen Maße vorgesehen sein, bevorzugt derart, dass Nenndrehzahl und / oder Nennleistung in gleichem Maße erhöht wird. Dies ist jedenfalls möglich für Dichten unterhalb der Referenzdichte $\rho 0$. Eine Erhöhung der Nenndrehzahl in einem Bereich unterhalb der Referenzdichte $\rho 0$ ist grundsätzlich vorteilhaft.

Eine Erhöhung der Nenndrehzahl erweist sich auch wie oben erläutert in einem Bereich oberhalb der Referenzdichte $\rho 0$ als möglich unter Berücksichtigung der Randbedingungen betreffend einen Turmfreigang TF. So sollte eine Erhöhung der Nenndrehzahl in dem schraffierten Bereich der Fig.5 der Absenkung des Blattwinkels unter die obere streng monoton fallende Pitchkennlinie -also generell im Bereich eines abgesenkten Blattwinkels auf der von der Luftdichte abhängigen Pitchkennlinie-- mit der Maßgabe erfolgen, dass die Nenndrehzahl grundsätzlich eine streng monoton fallende Funktion in Abhängigkeit einer zunehmenden Dichte ist.

Es zeigt sich, dass das Minimum $\alpha\_0$ des Blattwinkels umso ausgeprägter ist, desto geringer die Leistung ist - diese nimmt von P3 zu P1 zu. Erkennbar ist, dass der dichteabhängige Verlauf der Pitchkennlinien für eine mittlere Leistung P2 in etwa dem dichteabhängigen Verlauf der Pitchkennlinie in Fig.2 entspricht.

Demnach ist weiter vorgesehen, dass der Verlauf M des Blattwinkels um das Minimum bei einer geringeren Leistung P3 stärker ausgeprägter ist als der Verlauf m des Blattwinkels um das Minimum bei einer höheren Leistung P1. Anders formuliert kann man sagen der Verlauf m des Blattwinkels um das Minimum bei einer höheren Leistung P1 (insbesondere die Amplitude m der Absenkung des Blattwinkels unter die gestrichelt eingezeichnete streng monoton fallende Funktion bei einer höheren Leistung P1) ist flacher ausgeprägt als der Verlauf M des Blattwinkels um das Minimum bei einer geringeren Leistung P3 (insbesondere die Amplitude M der Absenkung des Blattwinkels unter die gestrichelt eingezeichnete streng monoton fallende Funktion bei einer geringeren Leistung P3).

Zusätzlich oder alternativ kann vorgesehen sein, dass --wie ebenfalls in Fig.7 erkennbar ein Bereich b der Pitchkennlinie eines abgesenkten Blattwinkels zwischen einer erhöhten Luftdichte p> und einer erniedrigten Luftdichte p< um das Minimum bei einer geringeren Leistung P3 kleiner ist als ein Bereich B bei einer höheren Leistung P1. Anders formuliert kann man sagen der Dichtebereich B der Pitchkennlinie eines abgesenkten Blattwinkels zwischen einer erhöhten Luftdichte p> und einer erniedrigten Luftdichte p< um das Minimum unter die gestrichelt eingezeichnete streng monoton fallende Funktion erstreckt sich bei einer höheren Leistung P1 über ein größeres Dichteintervall als der Dichtebereich b der Pitchkennlinie eines abgesenkten Blattwinkels zwischen einer erhöhten Luftdichte p> und einer erniedrigten Luftdichte $\rho$< um das Minimum unter die gestrichelt eingezeichnete streng monoton fallende Funktion bei einer geringeren Leistung P3.Es zeigt sich, dass die Windenergieanlage im Bereich einer für den Standort geltenden Referenzdichte $\rho 0$ einer Standortatmosphäre im Bereich um das Minimum $\alpha 0$ eines abgesenkten Pitchwinkels der Pitchkennlinie (also im Bereich eines abgesenkten Blattwinkels zwischen einer erhöhten Luftdichte p> und einer erniedrigten Luftdichte p< um das Minimum unter die gestrichelt eingezeichnete streng monoton fallende Funktion wie dieser durch die oben erläuterten Werte (B, m) bzw. (b, M) beispielhaft angegeben ist) grundsätzlich mit den oben erläuterten Maßgaben mit einer erhöhten Drehzahl betrieben werden kann.

Die Regelungsstruktur der Fig.8 zeigt veranschaulichend einen Generator 401 und ein Rotorblatt 403, das über einen Pitchantrieb 405 verstellt werden kann. Diese Elemente sind nur symbolisch dargestellt und es können bspw. drei Rotorblätter 403 mit jeweils einem Pitchantrieb 405 vorgesehen sein, die durch den Wind angetrieben werden und dadurch den Generator 401 antreiben.

Der Generator 401 ist hier als fremderregter Synchrongenerator vorgesehen und wird in dieser Struktur über einen Stromsteller 407 angesteuert, der den Erregerstrom $I_E$ steuert. Dadurch wird eine Leistungssteuerung vorgenommen, die hier nur vereinfacht angedeutet ist und auch anders vorgenommen werden kann. Es können auch andere Generatoren vorgesehen sein. Der Stromsteller 407 steht hier auch repräsentativ für andere Leistungssteuerungen. Er erhält einen Leistungswert P als Vorgabe und dieser Leistungswert P ergibt sich aus einer Drehzahl-Leistungs-Kennlinie, die in dem Kennlinienblock 409 hinterlegt ist. Der Kennlinienblock 409 gibt basierend auf der Drehzahl-Leistungs-Kennlinie in Abhängigkeit der Drehzahl n des Rotors, zu dem die Rotorblätter 403 gehören, einen Leistungswert P aus.

Der Leistungswert P geht nicht nur in den Stromsteller ein, um über den Stromsteller 407 die Leistung des Generators 401 zu steuern, sondern der Leistungswert P wird auch als Eingangsgröße für eine Blattwinkelvorgabeeinheit 411 verwendet. Die Blattvorgabeeinheit 411 bestimmt in Abhängigkeit der Leistung P einen einzustellenden Blattwinkel α. Dabei wird vorzugsweise als Eingangsgröße die Ausgangsleistung der Windenergieanlage verwendet, also die tatsächlich von der Windenergieanlage abgegebene Leistung.

Der Einfachheit halber und zur Veranschaulichung kann hier aber die Ausgangsleistung mit der Leistung P, die der Kennlinienblock 409 ausgibt, gleichgesetzt werden. Die Ausgangsleistung wird mit hoher Dynamik eingestellt, sodass diese Vereinfachung zur Veranschaulichung zulässig ist und sodass keine Schwingungsprobleme oder -gefahren zwischen der Leistungseinstellung einerseits und der Blattwinkelverstellung andererseits entstehen.

Die Blattwinkelvorgabeeinheit 411 weist mehrere Kennlinienblöcke auf, von denen hier exemplarisch drei Kennlinienblöcke K1, K2 und K3 gezeigt sind; also eine Schar von luftdichteabhängigen Pitchkennlinien Kα,ρ, die im Folgenden als K1, K2, K3 bezeichnet sind und als Teil eines Kennlinienfeldes Kα (P, n, ρ) zu sehen sind. Jeder dieser Kennlinienblöcke weist also eine leistungsabhängige Blattwinkelkennlinie auf, die zusammen eine Kennlinienschar bilden bzw. zur Auswahl bereitstehen. Es wird nun vorgeschlagen, je nach Luftdichte ρ einen der Kennlinienblöcke und damit eine der Kennlinien auszuwählen. Dafür kann die Luftdichte ρ bspw. durch eine Messeinheit 413 erfasst werden.

Der Blattwinkel α kann somit in Abhängigkeit der Ausgangsleistung P und der Luftdichte ρ eingestellt werden. Dafür bildet die Ausgangsleistung P die Eingangsgröße für die Blattvorgabeeinheit 411 und die Luftdichte ρ geht dadurch ein, dass abhängig von der Luftdichte ρ eine angepasste Kennlinie ausgewählt wird. Der so ermittelte Blattwinkel α wird dann auf den Pitchantrieb 405 gegeben, um das jeweilige Rotorblatt 403 entsprechend einzustellen.

Somit wurde gemäß dem Konzept der Erfindung eine Lösung vorgeschlagen, um den Stand der Technik zu verbessern, bei dem Rotorblätter so ausgelegt werden, dass sie bei einer Normluftdichte von ρ_norm = 1,225 kg/m³ und vor allem darunter in allen Betriebspunkten der Anlage ablösefrei umströmt werden und dennoch Lasten auch bei erhöhter Dichte kontrolliert sind.

Es wurde erkannt, dass zunehmend nun Anlagen an Standorten geplant werden, an denen die Luftdichte, teilweise deutlich, unter und vor allem auch über der Normluftdichte liegt. Grundsätzlich können durch einen Anstieg eines effektiven Anstellwinkels am Rotorblatt Strömungsablösungen auftreten, was wiederum zu beträchtlichen Leistungsverlusten führen kann. Es wurde darüber hinaus erkannt, dass es mit abnehmender Luftdichte und zunehmendem effektiven Anstellwinkel am Rotorblatt umso wahrscheinlicher ist, dass es zu leistungsreduzierenden Strömungsablösungen kommt.

Die Schar von luftdichteabhängigen Pitchkennlinien Kα,ρ --die im Folgenden als K1, K2, K3 bezeichnet sind und als Teil eines Kennlinienfeldes Kα (P, n, ρ) zu verstehen sindkönnen solchen Strömungsablösungen entgegenwirken oder diese jedenfalls mindern oder ganz verhindern. Durch Pitchen der Rotorblätter gemäß den Pitchkennlinien Kα,ρ können die Strömungsablösungen vorteilhaft vermieden werden.

Es wird hierbei vorgeschlagen, dass das Pitchen der Rotorblätter der Luftdichte angepasst wird. Demnach wird vorgeschlagen, dass der einzustellende Blattwinkel nun eine Funktion in Abhängigkeit der elektrischen Ausgangsleistung, nämlich der Ausgangsleistung, und der Luftdichte ist; nämlich in Abhängigkeit von der Luftdichte bei einer Referenzdichte ρ0 --die vorliegend der Normdichte ρ_norm einer Normatmosphäre entsprechen kann im allgemeinen aber eine Referenzdichte ρ0 sein kann. Insbesondere kann die Referenzdichte ρ0 eine "Cold Climate"-Luftdichte sein (also beispielsweise eine Referenzdichte ρ0 mit ρ>=1,3 kg/m³, wobei sich versteht, dass der Wert ρ>=1,3 kg/m³ grundsätzlich beispielhaft gewählt ist und auch ein anderer Wert zwischen einer Normdichte ρ_norm und 1,3 kg/m³ als Cold Climate"-Luftdichte für eine Referenzdichte gewählt werden könnte).

Es wird somit vorgeschlagen, dass nicht nur eine Funktion der elektrischen Ausgangsleistung der Einstellung des Blattwinkels zugrunde liegt. Es wird somit vorgeschlagen, an der Windenergieanlage -wenn nicht direkt die Luftdichte-- so beispielsweise den Luftdruck und die Temperatur und ggfs. ein Luftfeuchte zu messen und daraus die Luftdichte zu berechnen oder in einer Abwandlung ggfs. die Aufstellhöhe der Anlage zu berücksichtigen, sodass mithilfe einer hinterlegten Funktion der jeweilige Blattwinkel bestimmt werden kann.

Letztlich kann damit auch die Erhöhung der Jahreserträge einer pitchgesteuerten, drehzahlvariablen Windenergieanlage durch die vorgeschlagene Verwendung von an die Luftdichte des Standortes angepasste Pitchkennlinien erreicht werden.

**Patentansprüche**

1. Verfahren zum Betreiben einer Windenergieanlage, wobei die Windenergieanlage aufweist:

    - einen aerodynamischen Rotor mit in ihrem Blattwinkel verstellbaren Rotorblättern, wobei der Rotor mit einer variablen Rotordrehzahl betreibbar ist, und
    - einen mit dem aerodynamischen Rotor gekoppelten Generator, wobei
    - das Verfahren die Schritte aufweist:

        - Angeben der Luftdichte am Standort der Windenergieanlage
        - Einstellen eines Blattwinkels (α) eines verstellbaren Rotorblattes in Abhängigkeit einer Ausgangsleistung und/oder eines Drehmoments und/oder der Rotordrehzahl, wobei

- das Einstellen des Blattwinkels in Abhängigkeit wenigstens einer Pitchkennlinie (K$\alpha$, $\rho$) erfolgt, die den Blattwinkel als Funktion der Ausgangsleistung und/oder des Drehmoments und/oder der Rotordrehzahl und in Abhängigkeit der Luftdichte angibt,

**dadurch gekennzeichnet, dass**

- zur Berücksichtigung einer Luftdichte ($\rho$) am Standort der Windenergieanlage die Pitchkennlinie eine von der Luftdichte am Standort abhängige Pitchkennlinie (K$\alpha$,$\rho$) ist, bei welcher der Blattwinkel ($\alpha$) in Abhängigkeit von der Luftdichte am Standort im Bereich einer für den Standort geltenden Referenzdichte ($\rho$0) einer Standortatmosphäre ein Minimum ($\alpha$0) aufweist, wobei die Referenzdichte ($\rho$0) der Standortatmosphäre eine Normdichte einer Normatmosphäre ist, nämlich eine Referenzdichte ($\rho$0) mit einer Dichte ($\rho$) oberhalb oder bei 1,3 kg/m$^3$.

2. Verfahren nach Anspruch 1 **gekennzeichnet durch** Betreiben der Windenergieanlage an einem von kaltem Klima geprägten Standort mit einer Luftdichte am Standort, die eine "Cold Climate"-Luftdichte des von kaltem Klima geprägten Standorts ist, nämlich einer Standortatmosphäre an dem von kaltem Klima geprägten Standort.

3. Verfahren nach Anspruch 2, **dadurch gekennzeichnet, dass** der vom kalten Klima geprägte Standort der Windenergieanlage ein Standort ist,

- dessen mittlere Temperatur über das Jahr unter 0°C liegt, insbesondere unter -15°C liegt, und/oder
- dessen minimale Temperatur über das Jahr in einem Bereich unter -15°C, insbesondere unter -20°C, liegt.

4. Verfahren nach Anspruch einem der Ansprüche 1 bis 3, **dadurch gekennzeichnet, dass** der Blattwinkel auf der von der Luftdichte abhängigen Pitchkennlinie ausgehend von der Referenzdichte der Standortatmosphäre mit abnehmender Luftdichte und zunehmender Luftdichte ansteigt, und

- das Minimum der Pitchkennlinie ein im mathematischen Sinne lokales Minimum ist, wobei bei dem lokalen Minimum der Blattwinkel ($\alpha$0, $\alpha$($\rho$0)) im Vergleich zu einem ersten Blattwinkel ($\alpha$>($\rho$>) bei einer geringfügig gegenüber der Referenzdichte erhöhten Luftdichte ($\rho$>) und im Vergleich zu einem zweiten Blattwinkel ($\alpha$<($\rho$<)

bei einer geringfügig gegenüber der Referenzdichte erniedrigten Luftdichte (p<) am kleinsten ist, und/oder

- das Minimum ein im mathematischen Sinne globales Minimum ist, wobei bei dem globalen Minimum der Blattwinkel ($\alpha$0,$\alpha$($\rho$0)) der absolut kleinste Blattwinkel der gesamten Pitchkennlinie (K$\alpha$, $\rho$) ist.

5. Verfahren nach einem der Ansprüche 1 bis 4, **dadurch gekennzeichnet, dass** der Bereich des Minimums ($\alpha$0) bei der Referenzdichte der Standortatmosphäre eine Luftdichte umfasst, die +/- 10%, insbesondere +/- 5%, von der Referenzdichte abweicht.

6. Verfahren nach einem der vorstehenden Ansprüche, **dadurch gekennzeichnet, dass** die Luftdichte eine aktuelle Luftdichte am Standort der Windenergieanlage ist, die eine transient oder in Intervallen wiederholt angepasste Luftdichte ist, vorzugsweise die angepasste Luftdichte am Standort transient oder in vorbestimmten Intervallen wiederholt gemessen ist, wobei das Einstellen des Blattwinkels gemäß der von der Luftdichte abhängigen Pitchkennlinie (K$\alpha$,$\rho$) dynamisch angepasst wird.

7. Verfahren nach einem der Ansprüche 1 bis 5, **dadurch gekennzeichnet, dass** die Luftdichte eine standortbezogene generell vorherrschende Luftdichte ist, die eine für den Standort als maßgebliche, variable aber fest vorgegebene Luftdichte ist, die einmal oder wiederholt bestimmt wird, vorzugsweise als mittlere Luftdichte am Standort vorgegeben wird, wobei das Einstellen des Blattwinkels gemäß der von der Luftdichte abhängigen Pitchkennlinie (K$\alpha$,$\rho$) statisch angepasst wird.

8. Verfahren nach einem der vorstehenden Ansprüche, **dadurch gekennzeichnet, dass** die Pitchkennlinie ein Teil eines Kennlinienfeldes ist, in dem zur Berücksichtigung unterschiedlicher Luftdichten mehrere Pitchkennlinien entsprechend unterschiedlicher Referenzdichten ($\rho$0) hinterlegt sind und aus den hinterlegten Pitchkennlinien in Abhängigkeit der erfassten Luftdichte eine entsprechende Pitchkennlinie ausgewählt wird und zum Einstellen des Blattwinkels verwendet wird.

9. Verfahren nach einem der vorstehenden Ansprüche, **dadurch gekennzeichnet, dass**

- ein Turmfreigang und/oder eine Blattbiegung bei der Referenzdichte einer Standortatmosphäre festgelegt wird, insbesondere ein horizontaler Abstand im Bereich einer Blattspitze und/oder eine Blattbiegung des Rotorblattes zu einem Turm beim Turmdurchgang des Rotorblatts der Windenergieanlage festgelegt wird, wobei

- das Minimum des Blattwinkels derart festgelegt ist, dass der Turmfreigang minimal ist.

10. Verfahren nach einem der vorstehenden Ansprüche, **dadurch gekennzeichnet, dass** die von der Luftdichte abhängige Pitchkennlinie (Kα,ρ) derart verläuft, dass ein minimaler Turmfreigang beim Einstellen des Blattwinkels,

- unter Vorgabe wenigstens der Pitchkennlinie wenigstens für eine erhöhte Luftdichte (ρ>) weitgehend erhalten oder konstant bleibt, und/oder
- für eine erniedrigte Luftdichte (ρ<) abgesenkt ist, im Vergleich zu einem linear abnehmenden minimalen Turmfreigang in Abhängigkeit der Luftdichte für eine gleiche erhöhte bzw. erniedrigte Luftdichte.

11. Verfahren nach einem der vorstehenden Ansprüche, **dadurch gekennzeichnet, dass** ein Blattwinkel abgesenkt ist und/oder eine Nenndrehzahl (n_N) bei Nennbetrieb angehoben ist im Bereich einer für den Standort geltenden Referenzdichte (ρ0) einer Standortatmosphäre, nämlich im Bereich zwischen einem ersten Blattwinkel (α>, ρ>) einer gegenüber der Standortatmosphäre erhöhten Luftdichte (ρ>) und einem zweiten Blattwinkel (α<, ρ<) einer gegenüber der Standortatmosphäre erniedrigten Luftdichte (ρ<); vorzugsweise im Bereich einer für den Standort geltenden Referenzdichte (ρ0) einer Standortatmosphäre, der eine Luftdichte umfasst, die +/- 10%, insbesondere +/- 5%, von der Referenzdichte abweicht.

12. Verfahren nach einem der vorstehenden Ansprüche, **dadurch gekennzeichnet, dass** sich bei einer Pitchkennlinie der Verlauf des Minimums des Blattwinkels mit der Ausgangsleistung (P1, P2, P3) ändert, nämlich

- der Verlauf (m) des Blattwinkels um das Minimum bei einer höheren Leistung (P1) flacher ausgeprägt ist als der Verlauf (M) des Blattwinkels um das Minimum bei einer geringeren Leistung (P3), und/oder
- ein Bereich (B) der Pitchkennlinie eines abgesenkten Blattwinkels zwischen einer erhöhten Luftdichte (ρ>) und einer erniedrigten Luftdichte (ρ<) um das Minimum bei einer höheren Leistung (P1) größer ist als ein Bereich (b) der Pitchkennlinie eines abgesenkten Blattwinkels zwischen einer erhöhten Luftdichte (ρ>) und einer erniedrigten Luftdichte (ρ<) um das Minimum bei einer geringeren Leistung (P3).

13. Verfahren nach einem der vorstehenden Ansprüche, **dadurch gekennzeichnet, dass**

- die Pitchkennlinie den einzustellenden Blattwinkel für einen Teillastbetrieb angibt und/oder für einen Übergang von einem Teillast- in einen Nennlastbetrieb, insbesondere wobei in dem Teillastbetrieb der Wind derart schwach ist, dass die Windenergieanlage noch nicht mit ihrer maximalen Ausgangsleistung betrieben werden kann.

14. Einrichtung zum Steuern und/oder Regeln einer Windenergieanlage mit einem aerodynamischen Rotor mit in ihrem Blattwinkel verstellbaren Rotorblättern, wobei der Rotor mit einer variablen Rotordrehzahl betreibbar ist, und mit einem mit dem aerodynamischen Rotor gekoppelten Generator, wobei die Einrichtung eine Betriebsführung aufweist, die ausgebildet ist zur Durchführung des Verfahrens nach einem der vorhergehenden Ansprüche, wobei

- die Betriebsführung zum Angeben einer Luftdichte am Standort der Windenergieanlage und Einstellen eines Blattwinkels (α) eines verstellbaren Rotorblattes in Abhängigkeit einer Ausgangsleistung und/oder eines Drehmoments und/oder der Rotordrehzahl ausgebildet ist, wobei
- die Betriebsführung eine Pitchkennlinie (Kα) aufweist und das Einstellen des Blattwinkels in Abhängigkeit wenigstens der Pitchkennlinie (Kα) erfolgt, die den Blattwinkel als Funktion der Ausgangsleistung, des Drehmoments und/oder der Rotordrehzahl und in Abhängigkeit der Luftdichte angibt,

**dadurch gekennzeichnet, dass**

- zur Berücksichtigung einer Luftdichte (ρ) am Standort der Windenergieanlage, die Pitchkennlinie eine von der Luftdichte am Standort abhängige Pitchkennlinie (Kα,ρ) ist, und der Blattwinkel (α) der Pitchkennlinie (Kα,ρ) in Abhängigkeit von der Luftdichte im Bereich einer für den Standort geltenden Referenzdichte (ρ0) einer Standortatmosphäre ein Minimum (α0) aufweist, wobei die Referenzdichte (ρ0) der Standortatmosphäre eine Normdichte einer Normatmosphäre ist, nämlich eine Referenzdichte (ρ0) mit einer Dichte (ρ) oberhalb oder bei 1,3 kg/m$^3$.

15. Windenergieanlage, insbesondere an einem von kaltem Klima geprägten Standort mit einer Luftdichte, mit

- einen aerodynamischen Rotor mit in ihrem Blattwinkel verstellbaren Rotorblättern, wobei der Rotor mit einer variablen Rotordrehzahl betreibbar ist, und
- einen mit dem aerodynamischen Rotor gekoppelten Generator,

**gekennzeichnet durch** eine Einrichtung nach Anspruch 14 zum Steuern und/oder Regeln und/oder ausgebildet zur Durchführung eines Verfahrens nach einem der Ansprüche 1 bis 13.

## Claims

1. Method for operating a wind power installation, wherein the wind power installation has:

   - an aerodynamic rotor with rotor blades which are adjustable in terms of their blade angle, wherein the rotor is able to be operated at a variable rotor rotational speed, and
   - a generator which is coupled to the aerodynamic rotor, wherein
   - the method comprises the steps of:

     - specifying the air density at the location of the wind power installation,
     - setting a blade angle ($\alpha$) of an adjustable rotor blade in a manner dependent on an output power and/or a torque and/or the rotor rotational speed, wherein
     - the blade angle is set in a manner dependent on at least one pitch characteristic curve (K$\alpha$,p), which specifies the blade angle as a function of the output power and/or the torque and/or the rotor rotational speed and in a manner dependent on the air density,

   **characterized in that**,

   - to take account of an air density ($\rho$) at the location of the wind power installation, the pitch characteristic curve is a pitch characteristic curve (K$\alpha$,$\rho$) which is dependent on the air density at the location and in the case of which the blade angle ($\alpha$) has, in a manner dependent on the air density at the location, a minimum ($\alpha 0$) in the region of a reference density ($\rho 0$), applicable to the location, of a locational atmosphere, wherein the reference density ($\rho 0$) of the locational atmosphere is a standard density of a standard atmosphere, specifically a reference density ($\rho 0$) with a density ($\rho$) above or at 1.3 kg/m$^3$.

2. Method according to Claim 1, **characterized by** operating the wind power installation at a location **characterized by** a cold climate with an air density at the location that is a "cold climate" air density of the location **characterized by** a cold climate, specifically of a locational atmosphere at the location **characterized by** the cold climate.

3. Method according to Claim 2, **characterized in that** the location of the wind power installation **characterized by** the cold climate is a location

   - whose average temperature over a year is below 0°C, in particular below -15°C, and/or
   - whose minimum temperature over a year is in a range below -15°C, in particular below -20°C.

4. Method according to one of Claims 1 to 3, **characterized in that**, on the pitch characteristic curve which is dependent on the air density, the blade angle increases with decreasing air density and increasing air density from the reference density of the standard atmosphere, and

   - the minimum of the pitch characteristic curve is a local minimum in the mathematic sense, wherein, at the local minimum, the blade angle ($\alpha 0$, $\alpha(\rho 0)$) is smallest in comparison with a first blade angle ($\alpha > (\rho >)$) at an air density ($\rho >$) that is increased slightly in relation to the reference density and in comparison with a second blade angle ($\alpha < (\rho <)$) at an air density ($\rho <$) that is reduced slightly in relation to the reference density, and/or
   - the minimum is a global minimum in the mathematical sense, wherein, at the global minimum, the blade angle ($\alpha 0$, $\alpha(\rho 0)$) is the smallest blade angle of the entire pitch characteristic curve (K$\alpha$,$\rho$) in absolute terms.

5. Method according to one of Claims 1 to 4, **characterized in that** the region of the minimum ($\alpha 0$) at the reference density of the locational atmosphere includes an air density which has a deviation of +/- 10%, in particular +/- 5%, from the reference density.

6. Method according to one of the preceding claims, **characterized in that** the air density is a present air density at the location of the wind power installation that is an air density adapted in a transient manner or repeatedly at intervals, it preferably being the case that the adapted air density at the location is measured in a transient manner or repeatedly at predetermined intervals, wherein the setting of the blade angle is dynamically adapted according to the pitch characteristic curve (K$\alpha$,$\rho$) which is dependent on the air density.

7. Method according to one of Claims 1 to 5, **characterized in that** the air density is a locationrelated, generally prevailing air density which is a variable but fixedly predefined air density relevant to the location that is determined once or repeatedly, preferably being predefined as average air density at the location, wherein the setting of the blade angle is statically adapted according to the pitch characteristic curve ($K\alpha,\rho$) which is dependent on the air density.

8. Method according to one of the preceding claims, **characterized in that** the pitch characteristic curve is a part of a characteristic map in which, to take account of different air densities, multiple pitch characteristic curves corresponding to different reference densities ($\rho 0$) are stored and, in a manner dependent on the detected air density, a corresponding pitch characteristic curve is selected from the stored pitch characteristic curves and used for setting the blade angle.

9. Method according to one of the preceding claims, **characterized in that**

    - a tower clearance and/or a blade deflection at the reference density of a locational atmosphere is defined, in particular a horizontal spacing in the region of a blade tip and/or a blade deflection of the rotor blade in relation to a tower while the tower is being passed by the rotor blade of the wind power installation is defined, wherein
    - the minimum of the blade angle is defined in such a way that the tower clearance is minimal.

10. Method according to one of the preceding claims, **characterized in that** the pitch characteristic curve ($K\alpha,\rho$) which is dependent on the air density is such that a minimum tower clearance, when the blade angle is set,

    - with at least the pitch characteristic curve being predefined, is largely maintained or remains constant at least for an increased air density ($\rho>$), and/or
    - is decreased for a reduced air density ($\rho<$), in comparison with a minimum tower clearance decreasing linearly in a manner dependent on the air density for an equal increased air density or reduced air density, respectively.

11. Method according to one of the preceding claims, **characterized in that** a blade angle is reduced and/or a rated rotational speed (n_N) during rated operation is increased in the region of a reference density (p0), applicable to the location, of a locational atmosphere, specifically in the region between a first blade angle ($\alpha>$, $\rho>$) of an air density ($\rho>$) which is increased in relation to the locational atmosphere and a second blade angle ($\alpha<$, $\rho<$) of an air density ($\rho<$) which is reduced in relation to the locational atmosphere; preferably in the region of a reference density ($p0$), applicable to the location, of a locational atmosphere that includes an air density which has a deviation of +/- 10%, in particular +/- 5%, from the reference density.

12. Method according to one of the preceding claims, **characterized in that**, for a pitch characteristic curve, the profile at the minimum of the blade angle varies with the output power (P1, P2, P3), specifically

    - the profile (m) of the blade angle around the minimum for a relatively high power (P1) is flatter than the profile (M) of the blade angle around the minimum for a relatively low power (P3), and/or
    - a region (B) of the pitch characteristic curve of a reduced blade angle between an increased air density ($\rho>$) and a reduced air density ($\rho<$) around the minimum for a relatively high power (P1) is larger than a region (b) of the pitch characteristic curve of a reduced blade angle between an increased air density ($\rho>$) and a reduced air density ($\rho<$) around the minimum for a relatively low power (P3).

13. Method according to one of the preceding claims, **characterized in that**

    - the pitch characteristic curve specifies the blade angle to be set for part-load operation and/or for a transition from part-load to rated-load operation, in particular wherein, in part-load operation, the wind is so weak that the wind power installation cannot yet be operated at its maximum output power.

14. Device for open-loop control and/or closed-loop control of a wind power installation having an aerodynamic rotor with rotor blades which are adjustable in terms of their blade angle, wherein the rotor is able to be operated at a variable rotor rotational speed, and having a generator which is coupled to the aerodynamic rotor, wherein the device has an operational control which is configured for carrying out the method according to one of the preceding claims, wherein

    - the operational control is configured for specifying an air density at the location of the wind power installation and for setting a blade angle ($\alpha$) of an adjustable rotor blade in a manner dependent on an output power and/or a torque and/or the rotor rotational speed, wherein
    - the operational control has a pitch characteristic curve ($K\alpha$), and the blade angle is set in a manner dependent on at least the pitch characteristic curve ($K\alpha$), which specifies the blade angle as a function of the output power, the torque and/or the rotor rotational speed and in a manner dependent on the air density,

**characterized in that**,

- to take account of an air density ($\rho$) at the location of the wind power installation, the pitch characteristic curve is a pitch characteristic curve ($K\alpha,\rho$) which is dependent on the air density at the location, and the blade angle ($\alpha$) of the pitch characteristic curve ($K\alpha,\rho$) has, in a manner dependent on the air density, a minimum ($\alpha0$) in the region of a reference density ($\rho0$), applicable to the location, of a locational atmosphere, wherein the reference density ($\rho0$) of the locational atmosphere is a standard density of a standard atmosphere, specifically a reference density ($\rho0$) with a density ($\rho$) above or at 1.3 kg/m$^3$.

15. Wind power installation, in particular at a location **characterized by** a cold climate with an air density, having

- an aerodynamic rotor with rotor blades which are adjustable in terms of their blade angle, wherein the rotor is able to be operated at a variable rotor rotational speed, and
- a generator which is coupled to the aerodynamic rotor,

**characterized by** a device according to Claim 14 for open-loop control and/or closed-loop control and/or configured for carrying out a method according to one of Claims 1 to 13.

**Revendications**

1. Procédé d'exploitation d'une installation d'énergie éolienne, l'installation d'énergie éolienne présentant :

- un rotor aérodynamique avec des pales de rotor dont l'angle de pale est réglable, le rotor pouvant être exploité avec une vitesse de rotation de rotor variable, et
- un générateur couplé au rotor aérodynamique,
- le procédé présentant les étapes suivantes :

- l'indication de la densité de l'air au site de l'installation d'énergie éolienne
- le réglage d'un angle de pale ($\alpha$) d'une pale de rotor réglable en fonction d'une puissance de sortie et/ou d'un couple de rotation et/ou de la vitesse de rotation du rotor,
- le réglage de l'angle de pale s'effectuant en fonction d'au moins une courbe caractéristique de pas ($K\alpha,\rho$) qui indique l'angle de pale en fonction de la puissance de sortie et/ou du couple de rotation et/ou de la vitesse de rotation du rotor et en fonction de la densité de l'air,

**caractérisé en ce que**

- pour tenir compte d'une densité de l'air ($\rho$) au site de l'installation d'énergie éolienne, la courbe caractéristique de pas est une courbe caractéristique de pas ($K\alpha,\rho$) dépendant de la densité de l'air au site, pour laquelle l'angle de pale ($\alpha$) présente un minimum ($\alpha0$) en fonction de la densité de l'air au site dans la plage d'une densité de référence ($\rho0$) d'une atmosphère de site valable pour le site, la densité de référence ($\rho0$) de l'atmosphère de site étant une densité standard d'une atmosphère standard, à savoir une densité de référence ($\rho0$) avec une densité ($\rho$) supérieure ou égale à 1,3 kg/m$^3$.

2. Procédé selon la revendication 1, **caractérisé par** l'exploitation de l'installation d'énergie éolienne à un site marqué par un climat froid avec une densité de l'air au site qui est une densité de l'air « Cold Climate » du site marqué par un climat froid, à savoir une atmosphère de site au site marqué par un climat froid.

3. Procédé selon la revendication 2, **caractérisé en ce que** le site de l'installation d'énergie éolienne marqué par un climat froid est un site

- dont la température moyenne sur l'année est inférieure à 0 °C, notamment inférieure à -15 °C, et/ou
- dont la température minimale sur l'année se situe dans une plage inférieure à -15 °C, notamment inférieure à -20 °C.

4. Procédé selon l'une quelconque des revendications 1 à 3, **caractérisé en ce que** l'angle de pale sur la courbe caractéristique de pas dépendant de la densité de l'air augmente à partir de la densité de référence de l'atmosphère de site lorsque la densité de l'air diminue et lorsque la densité de l'air augmente, et

- le minimum de la courbe caractéristique de pas est un minimum local au sens mathématique, l'angle de pale ($\alpha0$, $\alpha(\rho0)$) étant le plus petit au minimum local en comparaison d'un premier angle de pale ($\alpha>(\rho>)$) pour une densité de l'air ($\rho>$) légèrement augmentée par rapport à la densité de référence et en comparaison d'un deuxième angle de pale ($\alpha<(\rho<)$) pour une den-

sité de l'air (ρ<) légèrement abaissée par rapport à la densité de référence, et/ou

- le minimum est un minimum global au sens mathématique, l'angle de pale ($\alpha0$, $\alpha(\rho0)$) étant au minimum global le plus petit angle de pale absolu de l'ensemble de la courbe caractéristique de pas ($K\alpha,\rho$).

5. Procédé selon l'une quelconque des revendications 1 à 4, **caractérisé en ce que** la plage du minimum ($\alpha0$) pour la densité de référence de l'atmosphère de site comprend une densité de l'air qui s'écarte de +/- 10 %, notamment de +/- 5 %, de la densité de référence.

6. Procédé selon l'une quelconque des revendications précédentes, **caractérisé en ce que** la densité de l'air est une densité de l'air actuelle au site de l'installation d'énergie éolienne, qui est une densité de l'air ajustée de manière transitoire ou de manière répétée à des intervalles, de préférence la densité de l'air ajustée au site est mesurée de manière transitoire ou de manière répétée à des intervalles prédéterminés, le réglage de l'angle de pale étant ajusté de manière dynamique conformément à la courbe caractéristique de pas ($K\alpha,\rho$) dépendant de la densité de l'air.

7. Procédé selon l'une quelconque des revendications 1 à 5, **caractérisé en ce que** la densité de l'air est une densité de l'air généralement prédominante relative au site, qui est une densité de l'air variable mais prédéfinie de manière fixe comme prépondérante pour le site, qui est déterminée une fois ou de manière répétée, de préférence qui est prédéfinie en tant que densité de l'air moyenne au site, le réglage de l'angle de pale étant ajusté de manière statique conformément à la courbe caractéristique de pas ($K\alpha,\rho$) dépendant de la densité de l'air.

8. Procédé selon l'une quelconque des revendications précédentes, **caractérisé en ce que** la courbe caractéristique de pas fait partie d'un champ de courbes caractéristiques dans lequel plusieurs courbes caractéristiques de pas correspondant à différentes densités de référence ($\rho0$) sont enregistrées pour tenir compte de différentes densités de l'air, et une courbe caractéristique de pas correspondante est sélectionnée parmi les courbes caractéristiques de pas enregistrées en fonction de la densité de l'air détectée et est utilisée pour régler l'angle de pale.

9. Procédé selon l'une quelconque des revendications précédentes, **caractérisé en ce que**

- un dégagement de la tour et/ou une flexion de la pale est établi (e) pour la densité de référence d'une atmosphère de site, notamment une distance horizontale dans la zone d'une pointe de pale et/ou une flexion de pale de la pale de rotor par rapport à une tour est établie lors du passage par la tour de la pale de rotor de l'installation d'énergie éolienne,

- le minimum de l'angle de pale étant établi de telle sorte que le dégagement de la tour est minimal.

10. Procédé selon l'une quelconque des revendications précédentes, **caractérisé en ce que** la courbe caractéristique de pas ($K\alpha,\rho$) dépendant de la densité de l'air a une allure telle qu'un dégagement de la tour minimal lors du réglage de l'angle de pale

- reste largement conservé ou constant en prédéfinissant au moins la courbe caractéristique de pas au moins pour une densité de l'air augmentée (p>), et/ou
- est réduit pour une densité de l'air abaissée (p<) en comparaison d'un dégagement de la tour minimal diminuant linéairement en fonction de la densité de l'air pour une même densité de l'air augmentée ou abaissée.

11. Procédé selon l'une quelconque des revendications précédentes, **caractérisé en ce qu'**un angle de pale est réduit et/ou une vitesse de rotation nominale ($n\_N$) en fonctionnement nominal est augmentée dans la plage d'une densité de référence ($\rho0$) d'une atmosphère de site valable pour le site, à savoir dans la plage entre un premier angle de pale ($\alpha>$, $\rho>$) d'une densité de l'air ($\rho>$) augmentée par rapport à l'atmosphère de site et un deuxième angle de pale ($\alpha<$, $\rho<$) d'une densité de l'air (p<) abaissée par rapport à l'atmosphère de site ; de préférence dans la plage d'une densité de référence ($\rho0$) d'une atmosphère de site valable pour le site, qui comprend une densité de l'air qui s'écarte de +/- 10 %, notamment de +/- 5 %, de la densité de référence.

12. Procédé selon l'une quelconque des revendications précédentes, **caractérisé en ce que**, pour une courbe caractéristique de pas, l'allure du minimum de l'angle de pale varie avec la puissance de sortie (P1, P2, P3), à savoir

- l'allure (m) de l'angle de pale autour du minimum à une puissance supérieure (P1) est plus plate que l'allure (M) de l'angle de pale autour du minimum à une puissance inférieure (P3), et/ou
- une plage (B) de la courbe caractéristique de pas d'un angle de pale réduit entre une densité de l'air augmentée (ρ>) et une densité de l'air abaissée (p<) autour du minimum à une puissance supérieure (P1) est plus grande qu'une plage (b) de la courbe caractéristique de pas d'un angle de pale réduit entre une densité de l'air augmentée ($\rho$>) et une densité de l'air abaissée (p<) autour du minimum à une puissance inférieure (P3).

13. Procédé selon l'une quelconque des revendications précédentes, **caractérisé en ce que**

- la courbe caractéristique de pas indique l'angle de pale à régler pour un fonctionnement à charge partielle et/ou pour un passage d'un fonctionnement à charge partielle à un fonctionnement à charge nominale, le vent étant notamment si faible dans le fonctionnement à charge partielle que l'installation d'énergie éolienne ne peut pas encore être exploitée à sa puissance de sortie maximale.

14. Dispositif pour la commande et/ou la régulation d'une installation d'énergie éolienne avec un rotor aérodynamique avec des pales de rotor dont l'angle de pale est réglable, le rotor pouvant être exploité avec une vitesse de rotation de rotor variable, et avec un générateur couplé au rotor aérodynamique, le dispositif présentant une gestion d'exploitation qui est configurée pour la réalisation du procédé selon l'une quelconque des revendications précédentes,

- la gestion d'exploitation étant configurée pour indiquer une densité de l'air au site de l'installation d'énergie éolienne et pour régler un angle de pale ($\alpha$) d'une pale de rotor réglable en fonction d'une puissance de sortie et/ou d'un couple de rotation et/ou de la vitesse de rotation du rotor,
- la gestion d'exploitation présentant une courbe caractéristique de pas (K$\alpha$) et le réglage de l'angle de pale s'effectuant en fonction d'au moins la courbe caractéristique de pas (K$\alpha$) qui indique l'angle de pale en fonction de la puissance de sortie, du couple de rotation et/ou de la vitesse de rotation du rotor et en fonction de la densité de l'air,

**caractérisé en ce que**

- pour tenir compte d'une densité de l'air ($\rho$) au site de l'installation d'énergie éolienne, la courbe caractéristique de pas est une courbe caractéristique de pas (K$\alpha$,$\rho$) dépendant de la densité de l'air au site, et l'angle de pale ($\alpha$) de la courbe caractéristique de pas (K$\alpha$,$\rho$) présente un minimum ($\alpha$0) en fonction de la densité de l'air dans la plage d'une densité de référence ($\rho$0) d'une atmosphère de site valable pour le site, la densité de référence ($\rho$0) de l'atmosphère de site étant une densité standard d'une atmosphère standard, à savoir une densité de référence ($\rho$0)

avec une densité ($\rho$) supérieure ou égale à 1,3 kg/m$^3$.

15. Installation d'énergie éolienne, notamment à un site marqué par un climat froid avec une densité de l'air, avec

- un rotor aérodynamique avec des pales de rotor dont l'angle de pale est réglable, le rotor pouvant être exploité à une vitesse de rotation de rotor variable, et
- un générateur couplé au rotor aérodynamique,

**caractérisée par** un dispositif selon la revendication 14 pour la commande et/ou la régulation et/ou configuré pour la réalisation d'un procédé selon l'une quelconque des revendications 1 à 13.

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010054013 A1
- DE 102016123450 A1
- US 20130045098 A1
- US 20130101413 A1
- US 20130280066 A1
- US 20160146189 A1
- EP 1368566 B1
- EP 1918581 A2
- EP 2463520 A2
- EP 1368566 A